(19) **Europäisches Patentamt / European Patent Office / Office européen des brevets**

(11) **EP 4 295 592 B1**

(12) **EUROPEAN PATENT SPECIFICATION**

(45) Date of publication and mention of the grant of the patent:
**02.07.2025 Bulletin 2025/27**

(21) Application number: **22730629.7**

(22) Date of filing: **06.05.2022**

(51) International Patent Classification (IPC):
**H04W 48/12** (2009.01)    **H04L 5/00** (2006.01)
**H04W 4/06** (2009.01)

(52) Cooperative Patent Classification (CPC):
**H04W 4/06; H04L 5/0053; H04L 5/0094; H04W 48/12**

(86) International application number:
**PCT/SE2022/050441**

(87) International publication number:
**WO 2022/235195 (10.11.2022 Gazette 2022/45)**

(54) **RADIO NETWORK NODE, USER EQUIPMENT, AND METHODS PERFORMED IN A WIRELESS COMMUNICATION NETWORK**

FUNKNETZWERKKNOTEN, BENUTZERGERÄT UND IN EINEM DRAHTLOSKOMMUNIKATIONSNETZWERK DURCHGEFÜHRTE VERFAHREN

NOEUD DE RÉSEAU RADIO, ÉQUIPEMENT UTILISATEUR ET PROCÉDÉS EXÉCUTÉS DANS UN RÉSEAU DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.05.2021 US 202163185378 P**

(43) Date of publication of application:
**27.12.2023 Bulletin 2023/52**

(73) Proprietor: **Telefonaktiebolaget LM Ericsson (publ)**
**164 83 Stockholm (SE)**

(72) Inventors:
• **SHREEVASTAV, Ritesh**
  **194 47 Upplands Väsby (SE)**
• **HULTSTRÖM, Maria**
  **117 61 Stockholm (SE)**
• **GUNNARSSON, Fredrik**
  **587 50 Linköping (SE)**
• **ALSENMYR, Gertie**
  **186 53 Vallentuna (SE)**
• **PALM, Håkan**
  **352 55 Växjö (SE)**
• **NADER, Ali**
  **212 42 Malmö (SE)**
• **BERGSTRÖM, Mattias**
  **192 70 Sollentuna (SE)**

(74) Representative: **Ericsson Patent Development**
**Torshamnsgatan 21-23**
**164 80 Stockholm (SE)**

(56) References cited:
**WO-A1-2019/216813     US-A1- 2020 084 704**
**US-A1- 2020 084 704**

• **HUAWEI ET AL: "Addition to new LTE TC-New IE_schedulingInfoList-v12j0 and schedulingInfoList- v12j0 and schedulingInfoListExt-r12", vol. RAN WG5, no. Electronic Meeting; 20201109 - 20201120, 31 October 2020 (2020-10-31), XP051948838, Retrieved from the Internet <URL:https://ftp.3gpp.org/tsg_ran/WG5_Test_ex-T1/TSGR5_89_Electronic/Docs/R5-205483.zip R5-205483 Addition of new LTE TC-Additional extended field in LTE SIB1_schedulingInfoList-v12j0 and schedulingInfoListExt-r12.doc> [retrieved on 20201031]**

• **HUAWEI ET AL: "Addition to new LTE TC-New IE_schedulingInfoList-v12j0 and schedulingInfoList- v12j0 and schedulingInfoListExt-r12", vol. RAN WG5, no. Electronic Meeting; 20201109 - 20201120, 31 October 2020 (2020-10-31), XP051948838, Retrieved from the Internet <URL:https:// ftp.3gpp.org/tsg_ran/WG5_Test_ex-T1/ TSGR5_89_Electronic/Docs/R5-205483.zip R5-205483 Addition of new LTE TC-Additional extended field in LTE SIB1_schedulingInfoList- v12j0 and schedulingInfoListExt-r12.doc> [retrieved on 20201031]**

**Description**

TECHNICAL FIELD

Embodiments herein relate to a radio network node, a user equipment (UE), and methods performed therein regarding communication in a wireless communication network. Furthermore, a computer program product and a computer-readable storage medium are also provided herein. Especially, embodiments herein relate to handling or enabling communication, e.g., handling system information (SI), in the wireless communication network.

BACKGROUND

In a typical wireless communication network, UEs, also known as wireless communication devices, mobile stations, stations (STA) and/or wireless devices, communicate via a Radio access Network (RAN) to one or more core networks (CN). The RAN covers a geographical area which is divided into service areas or cell areas, with each service area or cell area being served by a radio network node such as an access node e.g. a Wi-Fi access point or a radio base station (RBS), which in some radio access technologies (RAT) may also be called, for example, a NodeB, an evolved NodeB (eNodeB) and a gNodeB (gNB). The service area or cell area is a geographical area where radio coverage is provided by the radio network node. The radio network node operates on radio frequencies to communicate over an air interface with the UEs within range of the access node. The radio network node communicates over a downlink (DL) to the UE and the UE communicates over an uplink (UL) to the radio network node. The radio network node may be a distributed node comprising a remote radio unit and a separated baseband unit.

A Universal Mobile Telecommunications System (UMTS) is a third generation telecommunication network, which evolved from the second generation (2G) Global System for Mobile Communications (GSM). The UMTS terrestrial radio access network (UTRAN) is essentially a RAN using wideband code division multiple access (WCDMA) and/or High-Speed Packet Access (HSPA) for communication with UEs. In a forum known as the Third Generation Partnership Project (3GPP), telecommunications suppliers propose and agree upon standards for present and future generation networks and UTRAN specifically, and investigate enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. The RNCs are typically connected to one or more core networks.

Specifications for the Evolved Packet System (EPS) have been completed within the 3rd Generation Partnership Project (3GPP) and this work continues in the coming 3GPP releases, such as 5G networks. The EPS comprises the Evolved Universal Terrestrial Radio Access Network (E-UTRAN), also known as the Long-Term Evolution (LTE) radio access network, and the Evolved Packet Core (EPC), also known as System Architecture Evolution (SAE) core network. E-UTRAN/LTE is a 3GPP radio access technology wherein the radio network nodes are directly connected to the EPC core network. As such, the Radio Access Network (RAN) of an EPS has an essentially "flat" architecture comprising radio network nodes connected directly to one or more core networks.

With the emerging 5G technologies also known as new radio (NR), the use of very many transmit- and receive-antenna elements makes it possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals from a selected direction or directions, while suppressing unwanted signals from other directions.

Beamforming allows the signal to be stronger for an individual connection. On the transmit-side this may be achieved by a concentration of the transmitted power in the desired direction(s), and on the receive-side this may be achieved by an increased receiver sensitivity in the desired direction(s). This beamforming enhances throughput and coverage of the connection. It also allows reducing the interference from unwanted signals, thereby enabling several simultaneous transmissions over multiple individual connections using the same resources in the time-frequency grid, so-called multi-user Multiple Input Multiple Output (MIMO).

5G is the fifth generation of cellular technology and was introduced in Release 15 of the 3GPP standard. It is designed to increase speed, reduce latency, and improve flexibility of wireless services. The 5G system (5GS) includes both a new radio access network (NG-RAN) and a new core network (5GC).

SI is broadcast information in 2G - 5G RAN, which is transmitted periodically by the base station to the UE. SI comprises critical information for a UE to perform cell selection, cell access, cell reselection to other cells on the same frequency or to other frequencies or even to other RATs during mobility in radio resource control (RRC) Idle/inactive mode. System information provides all necessary details like System frame number, System bandwidth, public land mobile network (PLMN), cell selection and re-selection thresholds etc. to access a network. In addition, the system information may contain information needed for different services, such as Public Warning System, Device to Device, broadcast of positioning assistance data etc.

At high level in 5G New Radio the system information can be divided into three categories

- Minimum System Information (MSI) - carried in Master Information Block (MIB)
- Remaining Minimum System Information (RMSI) - carried in System Information Block (SIB) 1
- Other System Information (OSI) - containing SIB2 and higher

The MIB information is transmitted via broadcast channel (BCH) and physical broadcast channel (PBCH) channels while SIBs are transmitted via DL-shared channel (SCH) and physical downlink shared channel (PDSCH) channels.

Each OSI SIB has its own individual periodicity and is carried in SI messages. Within one SI message one or more SIBs can be contained if the periodicity, i.e., the rate at which the SIBs should be distributed, is the same and that the size allowed for the SI message is within the allowed limit. The maximum theoretical size for the SI message in NR stand-alone (SA) is 2976 bits (372 bytes) according to 3GPP, 3GPP TS 38.331 v16.4.1, but the actual size will depend on the selected numerology and cell bandwidth.

The type of SIBs for OSI can be divided into two categories:

1. Static - valid at cell setup and periodically distributed at all time (e.g. SIB2). Can be updated during run-time due to changes, e.g., new neighbor cells.
2. Event driven - only triggered at certain occasions and may only be valid and broadcast for a limited time period, e.g., SIB6, SIB7 and SIB8. Typically, the event driven SIBs are triggered by upper layers, outside RAN.

The scheduling information for each OSI SIB is carried in the SIB1, together with the periodicity and the mapping to SI messages. The SI messages are transmitted within periodically occurring time domain windows, referred to as SI-window. Each SI message is associated with an SI-window and the SI-windows of different SI messages do not overlap. That is, within one SI-window only the corresponding SI message is transmitted. The length of the SI-window is common for all SI messages and is configurable. Within the SI-window, the corresponding SI message can be transmitted several times by Layer 1 to assure that devices on the cell edge are able to obtain the SI message. SIB1 also contains the SI-window length.

Dynamic Spectrum Sharing (DSS) is a new antenna technology that enables the parallel deployment of LTE and 5G using the same frequency spectrum. The technology determines the demand for 5G and LTE in real-time. The network then divides the available bandwidth independently and decides dynamically for which mobile communications standard it uses the available frequencies.

A 5G NR device needs to detect synchronization signal blocks (SSB) to access the network. To maintain synchronization in time and frequency, SSBs must be sent periodically by the network, with a gap defined to transmit the SSB on an already occupied frequency channel used by LTE. To allow this gap in a continuous LTE transmission, one solution is to use multimedia broadcast single frequency network (MBSFN) subframes. To get a robust implementation of the distribution of the 5G NR System information the SI messages are also confined to the MBSFN subframes, but different subframes compared to the ones used for SSB.

To minimize the impact on LTE performance, typically only a few out of the possible 40 subframes are configured to be MBSFN subframes. The applied configuration is broadcast by the LTE with system information block type 2 (SIB2). A standard LTE terminal would read in the MBSFN configuration from SIB2 and ignore the subframes configured for broadcast.

DSS additionally enables the use of non-MBSFN subframes for NR on a need basis, typically used for the user data. DSS was included already in Rel-15 and further enhanced in Rel-16.

In TS 37.355, several positioning SIBs have been defined. Broadcast would be essential for scaling reasons when massive UE request positioning SIBs. This additionally put constraints on the NW side to dimension the NW to support broadcast. A list of posSIBs is tabulated below [TS 37.355 v 16.4.0]

| | posSibType | assistanceDataElement |
|---|---|---|
| GNSS Common Assistance Data (clause 6.5.2.2) | posSibType1-1 | GNSS-Reference Time |
| | posSibType1-2 | GNSS-ReferenceLocation |
| | posSibType1-3 | GNSS-IonosphericModel |
| | posSibType1-4 | GNSS-EarthOrientationParameters |
| | posSibType1-5 | GNSS-RTK-ReferenceStationInfo |
| | posSibType1-6 | GNSS-RTK-CommonObservationInfo |
| | posSibType1-7 | GNSS-RTK-AuxiliaryStationData |
| | posSibType1-8 | GNSS-SSR-CorrectionPoints |
| GNSS Generic Assistance Data (clause 6.5.2.2) | posSibType2-1 | GNSS-TimeModelList |
| | posSibType2-2 | GNSS-DifferentialCorrections |
| | posSibType2-3 | GNSS-NavigationModel |
| | posSibType2-4 | GNSS-RealTimeIntegrity |
| | posSibType2-5 | GNSS-DataBitAssistance |
| | posSibType2-6 | GNSS-AcquisitionAssistance |
| | posSibType2-7 | GNSS-Almanac |
| | posSibType2-8 | GNSS-UTC-Model |
| | posSibType2-9 | GNSS-AuxiliaryInformation |
| | posSibType2-10 | BDS-DifferentialCorrections |
| | posSibType2-11 | BDS-GridModelParameter |
| | posSibType2-12 | GNSS-RTK-Observations |
| | posSibType2-13 | GLO-RTK-BiasInformation |
| | posSibType2-14 | GNSS-RTK-MAC-CorrectionDifferences |
| | posSibType2-15 | GNSS-RTK-Residuals |
| | posSibType2-16 | GNSS-RTK-FKP-Gradients |
| | posSibType2-17 | GNSS-SSR-OrbitCorrections |
| | posSibType2-18 | GNSS-SSR-ClockCorrections |
| | posSibType2-19 | GNSS-SSR-CodeBias |
| | posSibType2-20 | GNSS-SSR-URA |
| | posSibType2-21 | GNSS-SSR-PhaseBias |
| | posSibType2-22 | GNSS-SSR-STEC-Correction |
| | posSibType2-23 | GNSS-SSR-GriddedCorrection |
| | posSibType2-24 | NavIC-DifferentialCorrections |
| | posSibType2-25 | NavIC-GridModelParameter |
| OTDOA Assistance Data (clause 7.4.2) | posSibType3-1 | OTDOA-UE-Assisted |
| Barometric Assistance Data (clause 6.5.5.8) | posSibType4-1 | Sensor-AssistanceDataList |
| TBS Assistance Data (clause 6.5.4.8) | posSibType5-1 | TBS-AssistanceDataList |
| NR DL-TDOA/DL-AoD Assistance Data (clauses 6.4.3, 7.4.2) | posSibType6-1 | NR-DL-PRS-AssistanceData |
| | posSibType6-2 | NR-UEB-TRP-LocationData |
| | posSibType6-3 | NR-UEB-TRP-RTD-Info |

There is a limit on the amount of SI messages that can be distributed for a certain deployment. It will depend on the numerology and the following formula needs to be fulfilled:

$$MAX \# SI\ messages = MIN(periodicities\ of\ OSI\ SIBs) \div SIwindow\ length\ (converted\ to\ ms)$$

3GPP ranges see 38.331 "Radio Resource Control (RRC) protocol specification", V16.4.1: SIB Periodicity = $2^x \times$ 80 ms where $0 \leq x \leq 6$ ,
SI-window length = $2^y \times 5 \times$ *slot length,* where $0 \leq y \leq 8$ and *slot length* = 1*ms for LB, 0.5ms for MB*

The SI-window length needs to assure a robust distribution of the SIBs by repetition on layer one (L1), i.e., enough number of slots inside the SI-window needs to be available for the L1 repetition. The number of L1 repetitions required relates to the actual size of the SI messages and the desired robustness is implementation specific as well as how many slots that are allowed for OSI.

The size of an SI message is limited to max 2976 bits in NR, see 38.331 "Radio Resource Control (RRC) protocol specification", V16.4.1, and depends on the cell bandwidth. A smaller SI message size will require less L1 repetitions, but the minimum required window size needs to fit the SIB with the largest size plus the SI message header.

With DSS the slots for the distribution of OSI is very limited when OSI is confined to MBSFN subframes and the SI-window length needs to be long to allow for L1 repetition. As other control information, e.g., SSB, needs to be confined to the MBSFN slots, it is not desired to counter for more than 1 slot for OSI every 20ms, providing a total allocation of e.g. 4 MBSFN subframes for NR. Consequently, the SI-window Length needs to be at least 40 ms, to allow for one re-transmission, and the shortest periodicity allowing more than 8 SI messages would then need to be 640ms. Typically, to provide good enough robustness the SI-window would need to be at least 80ms together with DSS, and the minimum periodicity for more than 8 SI messages needs to be as high as 1280ms.

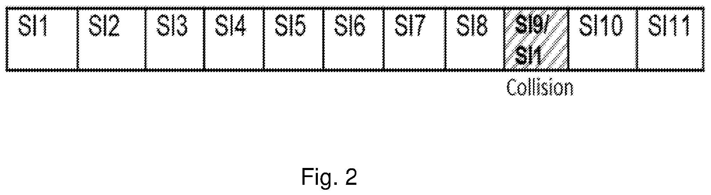

NR should allow contiguous scheduling of up to 32 SIs, max number of SI supported. If there is any collision as shown, diagonal stripes, in Fig. 2 the handling of such collision avoidance is not provided.

Considering: SI1 has periodicity of 160ms and SI window of 20ms has been configured and there are 11 SIs in total.

- Should UE expect to acquire SI9 or SI1?
- Should NW schedule SI9 or SI1?

The current specification has a partial solution. The field *offsetToSI-Used,* TS 38.331 v16.4.1, in NR was imported from LTE. This provides an offset of hardcoded 80ms + any offsets based upon number of SIs configured with 80ms periodicity SI. The main purpose with the offset is to avoid any collision that may happen when 80ms SI, NR legacy SI, periodicity may reoccur at a start slot of positioning SI.

The procedure of the offset is written based upon typical LTE configuration where the shortest periodicity is 80ms. Besides, in many operators network (NW) the SI-Window configured in LTE was 10ms. Hence, it was assumed that first 8 radio frames (rf) can be kept for LTE SI and after 80ms + the reoccurrence of 80ms SIs; then the positioning SI can start.

When Dynamic shared spectrum feature is used, a typical SI-Window length would be between 40 -160ms, depending on the amount of MBSFN subframes available for System Information. Also, in deployments without DSS a typical shortest periodicity in NR is set to 160ms. With these sorts of configurations and deployments, the current offsetToSI-Used based upon 80ms hardcoded offset will fail.

Extract from standard 38.331 "Radio Resource Control (RRC) protocol specification", V16.4.1 : 3> determine the number m which corresponds to the number of SI messages with an associated *si-Periodicity* of 8 radio frames (80 ms), configured by *schedulingInfoList* in *SIB1*;
3> for the concerned SI message, determine the number n which corresponds to the order of entry in the list of SI messages configured by *posSchedulingInfoList* in *SIB1*;
3> determine the integer value $x = m \times w + (n - 1) \times w$, where w is the *si-WindowLength*

Further, to illustrate the problem, a simplified table is shown below where at the start of system frame number (SFN)#0 or at the start of SI scheduling; the radio frames and slots are occupied. However, there are also regions which are un-occupied and can be potentially exploited.

An example table:

| Time (rf) | 0 | 2 | 4 | 6 | 8 | 10 | 12 | 14 |
|---|---|---|---|---|---|---|---|---|
| 0 | SI1 | SI2 | SI3 | SI4 | SI5 | posSI1 | posSI2 | posSI3 |
| 16 | SI1 | SI2 | | | | | | |
| 32 | SI1 | SI2 | | | | | | |
| 48 | SI1 | SI2 | | | | | | |
| 64 | SI1 | SI2 | | | | | | |
| 80 | SI1 | SI2 | | | | | | |
| … | SI1 | SI2 | | | | | | |

1

SI-Window 20ms

Occupied region

Empty/unoccupied region

SUMMARY

An object of embodiments herein is to provide a mechanism that improves communication during a handover in the wireless communication network.

The object of the invention is achieved by the subject-matter of the independent claims. Advantageous embodiments are defined in the dependent claims. Further examples are provided for facilitating the understanding of the invention.

Relevant prior art can also be found in:

- HUAWEI ET AL: "Addition to new LTE TC-New IE_schedulingInfoList-v12j0 and schedulingInfoList- v12j0 and schedulingInfoListExt-r12", R5-205483, 2020-10-31
- US 2020/084704 A1
- WO 2019/216813 A1

BRIEF DESCRIPTION OF THE DRAWINGS

Embodiments will now be described in more detail in relation to the enclosed drawings, in which:

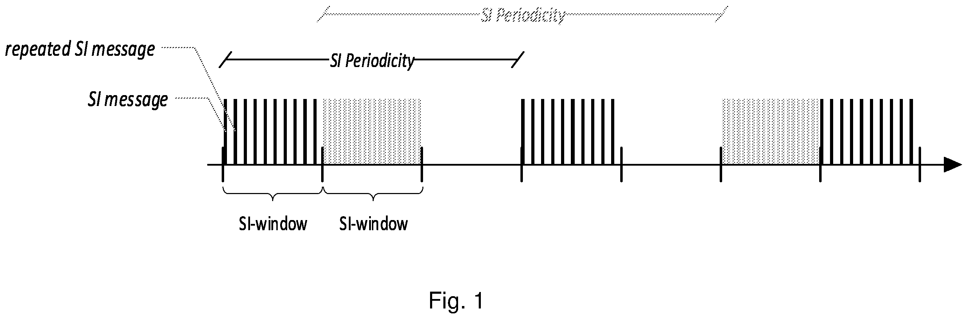

Figs. 1-2 are illustrations according to prior art;

Fig. 3a is a schematic overview depicting a wireless communication network according to embodiments herein;

Fig. 3b is a flowchart depicting a method performed by a UE according to embodiments herein;

Fig. 3c is a flowchart depicting a method performed by a radio network node according to embodiments herein;

Fig. 4 is an illustration of SI transmission according to prior art;

Fig. 5 is depicting a SI transmission according to embodiments herein;

Fig. 6 is depicting a SI transmission according to embodiments herein;

Fig. 7 is a combined signalling scheme and flowchart according to embodiments herein;

Fig. 8a is a flowchart depicting a method performed by a UE according to embodiments herein;

Fig. 8b is a flowchart depicting a method performed by a radio network node according to embodiments herein;

Fig. 9 is a flowchart depicting a method performed by a radio network node according to embodiments herein;

Fig. 10 is a block diagram depicting a UE according to embodiments herein;

Fig. 11 is a block diagram depicting a radio network node according to embodiments herein;

Fig. 12 schematically illustrates a telecommunication network connected via an intermediate network to a host computer;

Fig. 13 is a generalized block diagram of a host computer communicating via a base station with a user equipment over a partially wireless connection; and

Figs. 14-17 are flowcharts illustrating methods implemented in a communication system including a host computer, a base station and a user equipment.

DETAILED DESCRIPTION

Embodiments herein are described in the context of 5G/NR but the same concept can also be applied to other wireless communication system such as 4G/LTE. Embodiments herein may be described within the context of 3GPP NR radio technology (3GPP TS 38.300 V15.2.0 (2018-06)), e.g., using gNB as the radio network node. It is understood, that the problems and solutions described herein are equally applicable to wireless access networks and user-equipments (UEs) implementing other access technologies and standards. NR is used as an example technology where embodiments are suitable, and using NR in the description therefore is particularly useful for understanding the problem and solutions solving the problem. In particular, embodiments are applicable also to 3GPP LTE, or 3GPP LTE and NR integration, also denoted as non-standalone NR.

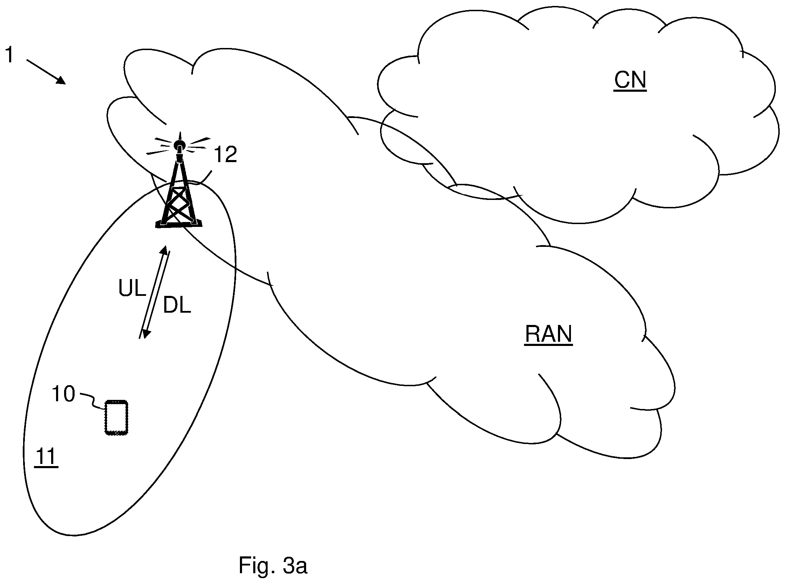

Embodiments herein relate to wireless communication networks in general. **Fig. 3a** is a schematic overview depicting **a wireless communication network 1.** The wireless communication network 1 comprises, e.g., one or more RANs and one or more CNs. The wireless communication network 1 may use one or a number of different technologies, such as Wi-Fi, Long Term Evolution (LTE), LTE-Advanced, NR, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in 5G systems, however, embodiments are also applicable in further development of the existing communication systems such as, e.g., a WCDMA or a LTE system.

In the wireless communication network 1, UEs, e.g., a UE 10 such as a mobile station, a non-access point (non-AP) station (STA), a STA, a wireless device and/or a wireless terminal, communicate via one or more Access Networks (AN), e.g., RAN, to one or more core networks (CN). It should be understood by the skilled in the art that "UE" is a non-limiting term which means any terminal, wireless communication terminal, wireless device, Machine Type Communication (MTC) device, Device to Device (D2D) terminal, internet of things (IoT) operable device, or node e.g. smart phone, laptop, mobile phone, sensor, relay, mobile tablets or even a small base station capable of communicating using radio communication with a network node within an area served by the network node.

The communication network 1 comprises **a radio network node 12** providing, e.g., radio coverage over a geographical area, **a first service area 11,** i.e., a first cell, of a radio access technology (RAT), such as NR, LTE, Wi-Fi, WiMAX or similar. The radio network node 12 may be a transmission and reception point, a computational server, a base station e.g. a network node such as a satellite, a Wireless Local Area Network (WLAN) access point or an Access Point Station (AP STA), an access node, an access controller, a radio base station such as a NodeB, an evolved Node B (eNB, eNodeB), a gNodeB (gNB), a base transceiver station, a baseband unit, an Access Point Base Station, a base station router, a transmission arrangement of a radio base station, a stand-alone access point or any other network unit or node depending e.g. on the radio access technology and terminology used. The radio network node 12 may alternatively or additionally be a controller node or a packet processing node or similar. The radio network node 12 may be referred to as source node, source access node or a serving network node wherein the first service area 11 may be referred to as a serving cell, source cell or primary cell, and the radio network node communicates with the UE 10 in form of DL transmissions to the UE 10 and UL transmissions from the UE 10. The radio network node may be a distributed node comprising a baseband unit and one or more remote radio units.

It should be noted that a service area may be denoted as cell, beam, beam group or similar to define an area of radio coverage.

According to embodiments herein one or more SI messages are scheduled using a first or a second list of scheduling information. The UE 10 determines, if the SI message is scheduled using the first list of scheduling information, the start position of the SI window based on a location of the SI message in the first list of scheduling information. If the SI message is scheduled using the second list of scheduling information, the UE 10 determines the start position of the SI window by taking a received input parameter into account, wherein the received input parameter is indicating the start position of the SI window used for acquiring the SI message. The UE 10 may thus acquire a system information message, being configured by the second list of scheduling information, taking the received, from the radio network node 12, input parameter into account.

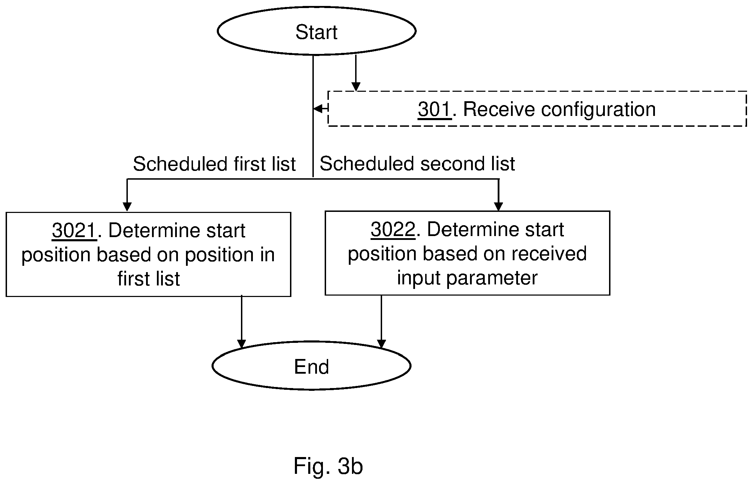

The method actions performed by the UE 10 for determining the start position of the SI window to acquire the SI message in the wireless communication network 1 according to embodiments herein will now be described with reference to a flowchart depicted in Fig. 3b. The actions do not have to be taken in the order stated below, but may be taken in any suitable order. Actions performed in some embodiments are marked with dashed boxes. One or more SI messages are scheduled using the first or the second list of scheduling information.

**Action 301.** The UE 10 may receive, from the network, configuration indicating if the SI message is scheduled using the first or the second list of scheduling information, and/or the input parameter indicating the start position of the SI window used for acquiring the SI message, thereby allowing the SI window to be offset.

**Action 3021.** The UE 10 determines, if the SI message is scheduled using the first list of scheduling information, the start position of the SI window based on a location of the SI message in the first list of scheduling information.

**Action 3022.** The UE 10 determines, if the SI message is scheduled using the second list of scheduling information, the start position of the SI window by taking the received input parameter into account, wherein the received input parameter is indicating the start position of the SI window used for acquiring the SI message. The received input parameter may be a value configured at the radio network node. In an example, the start position is determined, in case the SI message is scheduled using the second list of scheduling information, based on an integer value, which integer value is based on said received input parameter and window length of the SI message. The integer value may be calculated by taking the received input parameter minus 1 and multiplying it with a value representing the window length of the SI window. The integer value may designate where in the second list the SI is scheduled to start. Thus, the integer value $x = (\text{input parameter} - 1) \times w$, where $w$ is the si-WindowLength. Furthermore, the SI-window starts at the slot #a, where $a = x \bmod N$, in the radio frame for which $SFN \bmod T = FLOOR(x/N)$, where $T$ is the si-Periodicity of the concerned SI message and $N$ is the number of slots in a radio frame.

The received input parameter may be indicated in an information element (IE), in which presence in said IE indicates a start position of the SI window. Alternatively, the received input parameter may be indicated in a field in a message in which presence of said field indicates a start position of the SI window.

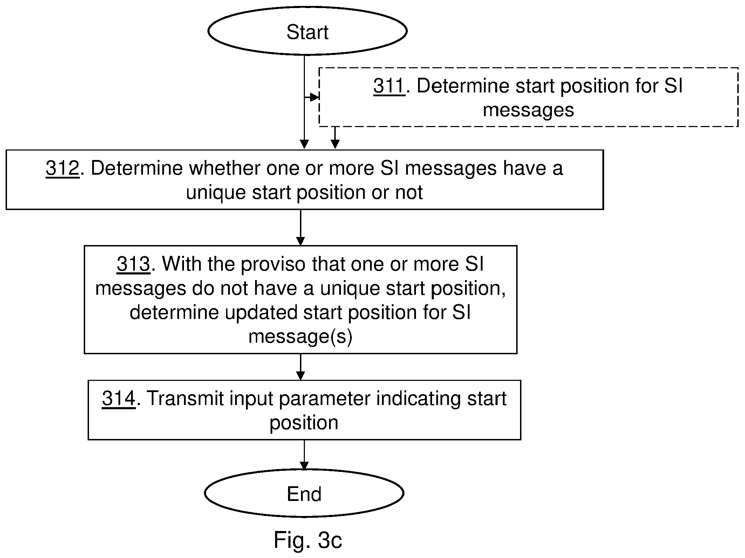

The method actions performed by the radio network node 12 for handling communication in the wireless communication network 1 according to embodiments herein will now be described with reference to a flowchart depicted in Fig. 3c. The actions do not have to be taken in the order stated below, but may be taken in any suitable order. Actions performed in some embodiments are marked with dashed boxes.

**Action 311.** The radio network node 12 may determine the start position for a respective SI message out of a number of SI messages that are to be scheduled in a cell of the radio network node.

**Action 312.** The radio network node 12 determines whether one or more SI messages have a unique start position or not. For example, the radio network node 12 may determine whether the one or more SI messages have a unique start position or not by determining whether or not a number of SI messages that are to be scheduled have a respective start position, where there is a conflict with another SI message or/and resources are not evenly occupied in time frequency domain.

**Action 313.** The radio network node 12 determines, with the proviso that the one or more SI messages do not have a unique start position, an updated start position for the one or more SI messages. Thus, with the proviso that one or more SI messages have a conflicting position with another SI message, i.e., that the one or more SI messages do not have a unique start position, the radio network node 12 determines additional updated start positions for the one or more SI messages.

**Action 314.** The radio network node 12 further transmits the input parameter to the UE 10 indicating the start position of the SI window used for acquiring the one or more SI messages.

The radio network node may configure the UE 10 with the input parameter, and that one or more SI messages are scheduled in the first and the second list of scheduling information.

The radio network node 12 may for example, configure the UE that SI messages are scheduled in the first and the second list of scheduling information and may indicate with the input parameter indicating the start position of the SI window used for acquiring the SI message, thereby allowing the SI window to be offset.

In some embodiments, the radio network node 12 may schedule SI according to two formulas, also referred to as procedures, for determining the start position of SI windows for SI messages.

There are thus two scheduling procedures for SI windows for SI messages:

A first procedure which is one which is described in current 3GPP TS 38.331 v16.4.1 section 5.2.2.3.2, it is shown here below. This procedure determines the position of a system information message by using a number n which is determined by the order of the SI-message in the first list of scheduling information also referred to as scheduling info list or *schedulingInfoList.* The number n is then used to determine a parameter x which is used to determine the point in time when the SI window for this SI message starts.

When acquiring an SI message, according to the first procedure, the UE 10 may:

1> determine the start of the SI-window for the concerned SI message as follows:
2> if the concerned SI message is configured in the *schedulingInfoList:*
3> for the concerned SI message, determine the number n which corresponds to the order of entry in the list of SI messages configured by *schedulingInfoList* in *si-SchedulingInfo* in *SIB1;*
3> determine the integer value x = $(n - 1) \times$ w, where w is the *si-WindowLength;*
3> the SI-window starts at the slot #a, where $a = x$ mod N, in the radio frame for which SFN mod $T$ = FLOOR(x/N), where $T$ is the *si-Periodicity* of the concerned SI message and N is the number of slots in a radio frame as specified in TS 38.213.

As can be seen, the starting time of the SI-window according to the first procedure depends on the location of the SI message in the first list of scheduling information. This results in that all SI messages has a pre-defined starting position, i.e., pre-defined in the sense that the starting position is defined by the location of the SI message in the first list.

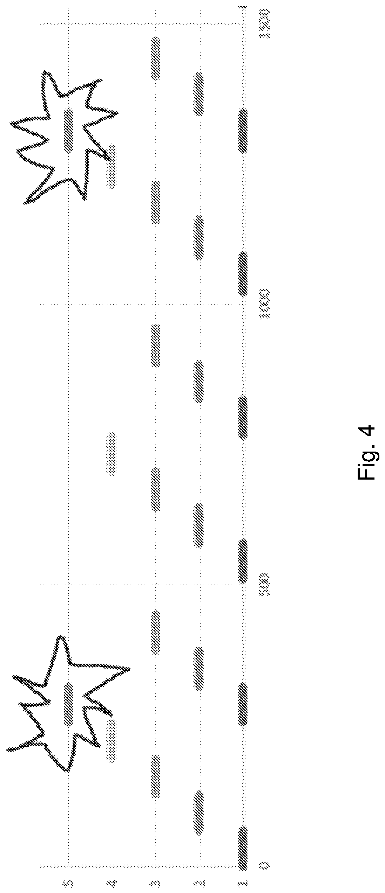

This becomes limiting as illustrated by the **Fig. 4.** In the Fig. 4 it is shown bars on 5 different levels. Time is defined on the x-axis. Each level (y-axis) corresponds to a particular SI message and the bars on a level N indicates the SI windows for the SI message N. We can for example see that SI message 1 has an SI window starting at time 0 since there is a bar on level 1 starting at time 0. The Fig. 4 illustrates a limitation of the above procedure. It is shown that the SI window for SI message 5 (i.e. level 5) collides with SI message 1's window since they occur at the same time.

The second procedure is, according to embodiments herein, a procedure wherein the UE 10 takes an indication e.g. an input parameter denoted e.g. si-WindowOffset or si-WindowStart-r16, into account when determining the parameter x according to the formula below.

3> determine the integer value x = (si-WindowOffset - 1) $\times$ w, where w is the si-WindowLength;
3> the SI-window starts at the slot #a, where a = x mod N, in the radio frame for which SFN mod T = FLOOR(x/N), where T is the si-Periodicity of the concerned SI message and N is the number of slots in a radio frame as specified in TS 38.213;

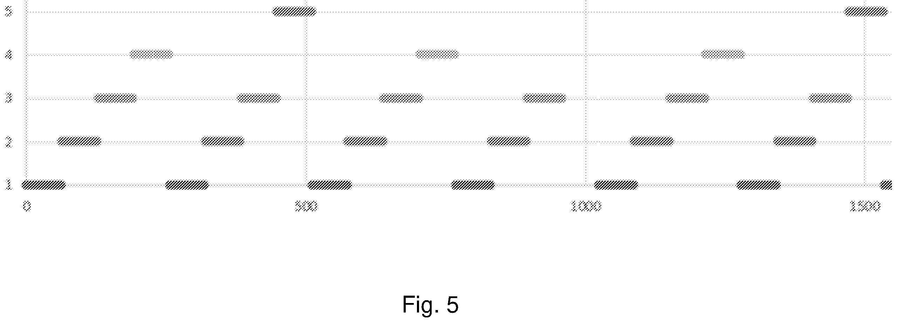

The second procedure thus allows the network to offset the SI window for an SI message, and this can be done independently of e.g. the location of an SI message in any list. **Fig. 5** shows the same number of SI messages as was shown in the Fig. 4, however, the second procedure has been applied for SI message 5. As can be seen the SI message 5 has been offset in time so it does not collide with any other SI message.

Selection of procedure for an SI message.

Whether the first or the second procedure is applied for an SI-message may be determined based on if the SI message is scheduled using the first or the second list of scheduling information. The first list may be denoted as schedulingInfoList and the second list may be denoted as schedulingInfoList2 or schedulingInfoListExt. This may be implemented as follows. In the following it can be seen that there is an if-statement which determines if the SI message is scheduled in the schedulingInfoList or scheduled in the schedulingInfoList2. If a particular SI message is configured in the schedulingInfoList (i.e. without a trailing 2) the first procedure is used for determining the time of the corresponding SI window. While if the SI message is configured in schedulingInfoList2, which can also be termed as *schedulingInfoListExt,* the UE 10 applies the second procedure.

When acquiring an SI message, the UE shall:

1> determine the start of the SI-window for the concerned SI message as follows:
**2> if the concerned SI message is configured in the *schedulingInfoList***
3> for the concerned SI message, determine the number n which corresponds to the order of entry in the list of SI messages configured by *schedulingInfoList* in *si-SchedulingInfo* in *SIB1;*
3> determine the integer value x = $(n - 1) \times$ w, where w is the *si-WindowLength*;
3> the SI-window starts at the slot #a, where a = x mod N, in the radio frame for which SFN mod $T$ = FLOOR(x/N), where $T$ is the *si-Periodicity* of the concerned SI message and N is the number of slots in a radio frame as specified in TS 38.213;
**2> else if the concerned SI message is configured in the *schedulingInfoListExt:***

3> determine the integer value x = *(si-WindowOffset - 1)* × w, where w is the *si-WindowLength;*
3> the SI-window starts at the slot #a, where a = x mod N, in the radio frame for which SFN mod *T* = FLOOR(x/N), where *T* is the *si-Periodicity* of the concerned SI message and N is the number of slots in a radio frame as specified in TS 38.213.

Note in the above example implementation of embodiments, there is an if-elseif statement which is used to determine if the schedulingInfoList2(schedulingInfoListExt) is applicable. However, it would be possible to have a simple if-else statement, like in the below:
When acquiring an SI message, the UE shall:

1> determine the start of the SI-window for the concerned SI message as follows:
**2> if the concerned SI message is configured in the *schedulingInfoList***
3> for the concerned SI message, determine the number n which corresponds to the order of entry in the list of SI messages configured by *schedulingInfoList* in *si-SchedulingInfo* in *SIB1;*
3> determine the integer value x = *(n - 1)* × w, where w is the *si-WindowLength*;
3> the SI-window starts at the slot #a, where a = x mod N, in the radio frame for which SFN mod *T* = FLOOR(x/N), where *T* is the *si-Periodicity* of the concerned SI message and N is the number of slots in a radio frame as specified in TS 38.213;
**2> else:**
3> determine the integer value x = *(si-WindowOffset - 1)* × w, where w is the *si-WindowLength;*
3> the SI-window starts at the slot #a, where a = x mod N, in the radio frame for which SFN mod *T* = FLOOR(x/N), where *T* is the *si-Periodicity* of the concerned SI message and N is the number of slots in a radio frame as specified in TS 38.213;

Special Config and Value range

The maximum value of the input parameter, here denoted si-WindowOffset, can be deduced based upon the NR-numerology that has been used. Considering that for subcarrier spacing (SCS) of 120kHz, accommodating 80 slots per radio frame, the minimum SI-Window length that can be configured is 5 slots, and the maximum SI periodicity is 512 radio frames. Hence, an input parameter in terms of SI-window would be 8192 (512*80/5); i.e., there can be at max 8192 SI-Window position.
This would require 13 bits. There is possibility to compress by giving choice between the commonly configured SI-Window length and subcarrier spacing (SCS). For example, for 30KhZ and SI-WindowLength of 40 slots; the input parameter can be 256, which will be indicated with 7 bits.
In terms of ASN.1 relating to the input parameter being exemplified as a posSI-WindowOffset, the choice of the input parameter may be as below where for different SCS we can have different values

```
posSI-WindowOffset-v16xy        CHOICE {
     scs15kHz                        INTEGER (1..1024),
     scs30KHz                        INTEGER (1..2048),
     scs60KHz                        INTEGER (1..4096),
     scs120KHz                       INTEGER (1..8192)
     }                          OPTIONAL -Need R
```

Alternatively, using combination of SCS and two different SI-Window length slots, such as a first SI-window length of 40 slots and one smaller of 5 slots, the input parameter may be defined in:

```
posSI-WindowOffset-v16xy        CHOICE {
     scs30KHz40Slots                 INTEGER (0..255),
      scs120KHz5Slots                INTEGER (0..8191)
     }                          OPTIONAL -Need R
```

Thus, the input parameter may be based on SCS.
An alternate option to compress is that since there are maximum 32 SIs; the offset is designated in terms of where in the list the SI appears.
In order to avoid any repetition of reoccurrence of an SI in a designated start slot; the start position of SI is shifted. The number of shifts depends upon how many SI reoccurs periodically.

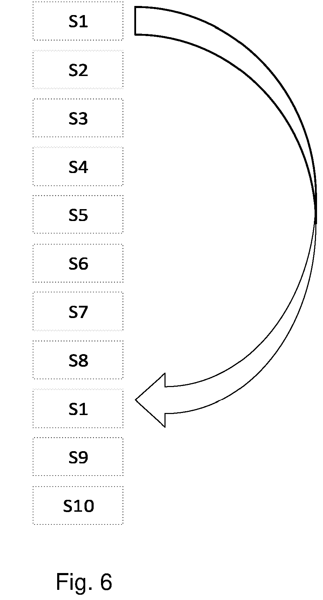

**Fig. 6** shows an example. Considering 10 SIs kept in a contiguous way for scheduling. But S1 needs to reoccur before S9 is scheduled. Then the position of S9 will be taken by S1 and S9 position would be shifted.

As there are 32 SIs; one can consider a queue/list of 32 items; however, since there will be need of shift; the number of shifts or manipulation/change of start position; thus the array can be considered to be a maximum of 64; hence an Integer (1..63) value can be provided to designate where in the array/list the SI is scheduled to start.

Changes to the relevant standard may be needed for how non-positioning SIs and positioning Sis are scheduled.

In terms of procedure text; the text below is shown for both non-positioning and positioning SIs. For the positioning SIs the input parameter may be termed as posSI-WindowOffset.

For positioning SI, separate second list also denoted as posSchedulingInfoList exist where the new formula can be used. For the non-positioning SIs in order not to impact the legacy Rel-15 SIs a separate second list of scheduling information can be created which can be termed

*schedulingInfoList-Ext:*

The required change is shown as underlined and bold in the following sections (baseline text from TS 38.331 section 5.2.2.3.2 v16.4.0).

When acquiring an SI message, the UE shall:

1> determine the start of the SI-window for the concerned SI message as follows:

2> if the concerned SI message is configured in the *schedulingInfoList:*

3> for the concerned SI message, determine the number n which corresponds to the order of entry in the list of SI messages configured by *schedulingInfoList* in *si-SchedulingInfo* in *SIB1;*

3> determine the integer value x = *(n* - 1) $\times$ w, where w is the *si-WindowLength*;

3>the SI-window starts at the slot #a, where a = x mod N, in the radio frame for which SFN mod *T* = FLOOR(x/N), where *T* is the *si-Periodicity* of the concerned SI message and N is the number of slots in a radio frame as specified in TS 38.213;

**2> else if the concerned SI message is configured by the *SchedulingInfoListExt* and *si-WindowOffset* is configured in any SI message:**

**3> determine the integer value *x = (si-WindowOffset- 1)* $\times$ w, where w is the *si-WindowLength;***

**3>the SI-window starts at the slot #a, where a = *x* mod N, in the radio frame for which SFN mod *T* = FLOOR(x/N), where *T* is the *si-Periodicity* of the concerned SI message and N is the number of slots in a radio frame as specified in TS 38.213;**

2> else if the concerned SI message is configured in the *posSchedulingInfoList* and either *offsetToSI-Used* or *posSI-WindowOffset* is not configured:

3> create a concatenated list of SI messages by appending the *posSchedulingInfoList* in *posSI-SchedulingInfo* in *SIB1* to *schedulingInfoList* in *si-SchedulingInfo* in *SIB1;*

3> for the concerned SI message, determine the number n which corresponds to the order of entry in the concatenated list;

3> determine the integer value *x = (n* - 1) $\times$ w, where w is the *si-WindowLength*;

3>the SI-window starts at the slot #a, where a = *x* mod N, in the radio frame for which SFN mod *T* = FLOOR(x/N), where *T* is the *posSI-Periodicity* of the concerned SI message and N is the number of slots in a radio frame as specified in TS 38.213;

2> else if the concerned SI message is configured by the *posSchedulingInfoList* and *offsetToSI-Used* is configured:

3> determine the number m which corresponds to the number of SI messages with an associated *si-Periodicity* of 8 radio frames (80 ms), configured by *schedulingInfoList* in *SIB1*;

3> for the concerned SI message, determine the number n which corresponds to the order of entry in the list of SI messages configured by *posSchedulingInfoList* in *SIB1;*

3> determine the integer value $x = m \times w + (n - 1) \times w$, where w is the *si-WindowLength*

3>the SI-window starts at the slot #a, where $a = x$ mod N, in the radio frame for which SFN mod $T =$ FLOOR(x/N) +8, where $T$ is the *posSI-Periodicity* of the concerned SI message and N is the number of slots in a radio frame as specified in TS 38.213;

**2> else if the concerned SI message is configured by the *posSchedulingInfoList* and *posSI-Window-Offset* is configured in any SI message:**

**3> determine the integer value $x = (posSI\text{-}WindowOffset\text{-} 1) \times w$, where w is the *si-WindowLength*;**

**3> the SI-window starts at the slot #a, where $a = x$ mod N, in the radio frame for which SFN mod $T =$ FLOOR(x/N), where $T$ is the *posSI-Periodicity* of the concerned SI message and N is the number of slots in a radio frame as specified in TS 38.213;**

1> receive the PDCCH containing the scheduling RNTI, i.e. SI-RNTI in the PDCCH monitoring occasion(s) for SI message acquisition, from the start of the SI-window and continue until the end of the SI-window whose absolute length in time is given by si-WindowLength, or until the SI message was received;

*PosSI-SchedulingInfo*

```
-- ASN1START
-- TAG-POSSI-SCHEDULINGINFO-START


PosSI-SchedulingInfo-r16 ::=                    SEQUENCE {
    posSchedulingInfoList-r16                       SEQUENCE (SIZE (1..maxSI-
Message)) OF PosSchedulingInfo-r16,
    posSI-RequestConfig-r16                         SI-RequestConfig
OPTIONAL,   -- Cond MSG-1
    posSI-RequestConfigSUL-r16                      SI-RequestConfig
OPTIONAL,   -- Cond SUL-MSG-1
    ...
}


PosSchedulingInfo-r16 ::= SEQUENCE {
    offsetToSI-Used-r16            ENUMERATED {true}
OPTIONAL,   -- Need R
    posSI-Periodicity-r16          ENUMERATED {rf8, rf16, rf32, rf64,
rf128, rf256, rf512},
    posSI-BroadcastStatus-r16      ENUMERATED {broadcasting,
notBroadcasting},
    posSIB-MappingInfo-r16         PosSIB-MappingInfo-r16,
    ...,
    [[
    posSI-WindowOffset-v16xy       CHOICE {
        scs30KHz40Slots                INTEGER (1..256),
        scs120KHz5Slots                INTEGER (1..8192)
        }                              OPTIONAL -Need R
    ]]
}


PosSIB-MappingInfo-r16 ::=    SEQUENCE (SIZE (1..maxSIB)) OF PosSIB-Type-
r16


PosSIB-Type-r16 ::=          SEQUENCE {
    encrypted-r16                ENUMERATED { true }
OPTIONAL,   -- Need R
    gnss-id-r16                  GNSS-ID-r16
OPTIONAL,   -- Need R
    sbas-id-r16                  SBAS-ID-r16
OPTIONAL,   -- Need R
    posSibType-r16               ENUMERATED { posSibType1-1, posSibType1-
2, posSibType1-3, posSibType1-4, posSibType1-5, posSibType1-6,
                                   posSibType1-7, posSibType1-
8, posSibType2-1, posSibType2-2, posSibType2-3, posSibType2-4,
```

```
                                                  posSibType2-5, posSibType2-
6, posSibType2-7, posSibType2-8, posSibType2-9, posSibType2-10,
                                          posSibType2-11,
posSibType2-12, posSibType2-13, posSibType2-14, posSibType2-15,
                                          posSibType2-16,
posSibType2-17, posSibType2-18, posSibType2-19, posSibType2-20,
                                          posSibType2-21,
posSibType2-22, posSibType2-23, posSibType3-1, posSibType4-1,
                                          posSibType5-1,posSibType6-
1, posSibType6-2, posSibType6-3,... },
    areaScope-r16                    ENUMERATED {true}
OPTIONAL -- Need S
}


GNSS-ID-r16 ::= SEQUENCE {
    gnss-id-r16                  ENUMERATED{gps, sbas, qzss, galileo,
glonass, bds, ...},
    ...
}


SBAS-ID-r16 ::= SEQUENCE {
    sbas-id-r16                  ENUMERATED { waas, egnos, msas, gagan, ...},
    ...
}


-- TAG-POSSI-SCHEDULINGINFO-STOP
-- ASN1STOP
```

| PosSI-SchedulingInfo field descriptions |
|---|
| **areaScope**<br>Indicates that a posSIB is area specific. If the field is absent, the posSIB is cell specific. |
| **encrypted**<br>The presence of this field indicates that the *pos-sib-type* is encrypted as specified in TS 37.355 [49]. |
| **gnss-id**<br>The presence of this field indicates that the positioning SIB type is for a specific Global Navigation Satellite System (GNSS). Indicates a specific GNSS (see also TS 37.355 [49]) |
| **posSI-BroadcastStatus**<br>Indicates if the SI message is being broadcasted or not. Change of *posSI-BroadcastStatus* should not result in system information change notifications in Short Message transmitted with P-RNTI over DCI (see clause 6.5). The value of the indication is valid until the end of the BCCH modification period when set to *broadcasting*. |
| **posSI-RequestConfig**<br>Configuration of Msg1 resources that the UE uses for requesting SI-messages for which *posSI-BroadcastStatus* is set to notBroadcasting. |
| **posSI-RequestConfigSUL**<br>Configuration of Msg1 resources that the UE uses for requesting SI-messages for which *posSI-BroadcastStatus* is set to notBroadcasting. |
| **posSIB-MappingInfo** |

(continued)

| PosSI-SchedulingInfo field descriptions |
|---|
| List of the posSIBs mapped to this *SystemInformation* message. |
| *posSibType* <br> The positioning SIB type is defined in TS 37.355 [49]. |
| *posSI-Periodicity* <br> Periodicity of the SI-message in radio frames, such that rf8 denotes 8 radio frames, rf16 denotes 16 radio frames, and so on. If the *offsetToSI-Used* is configured, the *posSI-Periodicity* of rf8 cannot be used. |
| **posSI-WindowOffset** <br> **This field, if present indicates the configured start occasion (system frame number (SFN), slot) of the SI message in _posSchedulingInfoList._** |
| *offsetToSI-Used* <br> This field, if present indicates that the SI messages in *posSchedulingInfoList* are scheduled with an offset of 8 radio frames compared to SI messages in *schedulingInfoList*. *offsetToSI-Used* may be present only if the shortest configured SI message periodicity for SI messages in *schedulingInfoList* is 80ms. |
| *sbas-id* <br> The presence of this field indicates that the positioning SIB type is for a specific SBAS. Indicates a specific SBAS (see also TS 37.355 [49]). |

| Conditional presence | Explanation |
|---|---|
| MSG-1 | The field is optionally present, Need R, if *posSI-BroadcastStatus* is set to *notBroadcasting* for any SI-message included in *PosSchedulingInfo.* It is absent otherwise. |
| SUL-MSG-1 | The field is optionally present, Need R, if *supplementaryUplink* is configured in *Serving-CellConfigCommonSIB* and if *posSI-BroadcastStatus* is set to *notBroadcasting* for any SI-message included in *PosSchedulingInfo.* It is absent otherwise. |

*SI-SchedulingInfo*

The IE *SI-SchedulingInfo* contains information needed for acquisition of SI messages.

**SI-SchedulingInfo information element**

```
-- ASN1START
-- TAG-SI-SCHEDULINGINFO-START

SI-SchedulingInfo ::=                   SEQUENCE {
    schedulingInfoList                  SEQUENCE (SIZE (1..maxSI-
Message)) OF SchedulingInfo,
    si-WindowLength                     ENUMERATED {s5, s10, s20, s40,
s80, s160, s320, s640, s1280},
    si-RequestConfig                    SI-RequestConfig
OPTIONAL,   -- Cond MSG-1
    si-RequestConfigSUL                 SI-RequestConfig
OPTIONAL,   -- Cond SUL-MSG-1
    systemInformationAreaID             BIT STRING (SIZE (24))
OPTIONAL,   -- Need R
    ...,
    schedulingInfoListExt-v16xy         SEQUENCE (SIZE (1..maxSI-Message))
OF                                                  SchedulingInfoExt-v16xy
OPTIONAL -- Need R
}

SchedulingInfo ::=                      SEQUENCE {
    si-BroadcastStatus                  ENUMERATED {broadcasting,
notBroadcasting},
    si-Periodicity                      ENUMERATED {rf8, rf16, rf32,
rf64, rf128, rf256, rf512},
    sib-MappingInfo                     SIB-Mapping
}

SchedulingInfoExt-v16xy ::=                 SEQUENCE {
```

EP 4 295 592 B1

```
     si-WindowOffset-v16xy                    INTEGER (1..8192)
     OPTIONAL, -Need R
     ...


}


SIB-Mapping ::=                              SEQUENCE (SIZE (1..maxSIB)) OF SIB-
TypeInfo


SIB-TypeInfo ::=                             SEQUENCE {
     type                                    ENUMERATED {sibType2, sibType3,
sibType4, sibType5, sibType6, sibType7, sibType8, sibType9,
                                                         sibType10-v1610,
sibType11-v1610, sibType12-v1610, sibType13-v1610, sibType14-v1610,
                                                         spare3, spare2,
spare1,... },
     valueTag                                INTEGER (0..31)
OPTIONAL, -- Cond SIB-TYPE
     areaScope                               ENUMERATED {true}
OPTIONAL -- Need S
}


-- TAG-SI-SCHEDULINGINFO-STOP
-- ASN1STOP
```

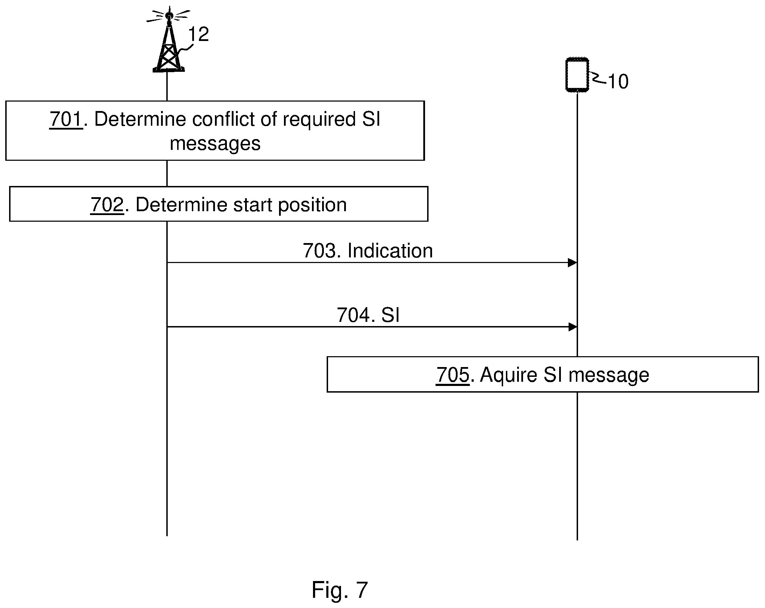

**Fig. 7** is a combined signalling scheme and flowchart according to some embodiments herein for SI provision in the wireless communication network.

**Action 701.** The radio network node 12 determines whether or not a required number of SI messages that is to be scheduled have a respective start position where, in said respective start position, there is a conflict with another SI message or/and resources are not evenly occupied in time frequency domain. Thus, the radio network node 12 determines whether the one or more SI messages have a unique start position.

**Action 702.** The radio network node 12 may select or determine (or redetermine) an updated start position for the SI messages that have a conflict with another SI message and/or which resources are not evenly occupied in time frequency domain. Thus, with the proviso that one or more SI messages have a conflicting position with another SI message, the radio network node 12 determines additional one or more start positions for the one or more SI messages.

**Action 703.** The radio network node 12 further transmits an indication, also denoted as input parameter, to a UE indicating the determined updated start positions for the SI messages. The radio network node 12 may for example, configure the UE 10 that SI messages are scheduled in the first and the second list of scheduling information and may indicate the input parameter such as an offset in time and/or slots/frames. Hence, the indication or the input parameter may comprise an offset and may be related to SI messages of the first and/or the second list. The input parameter may be denoted as a si-WindowOffset and indicated in an IE or a field in a message. This field, if present may indicate the configured offset relative another SI window in number of SI-Windowlength slots to determine the start slot of the SI message in the second list; for e.g. Value 1 may represent at SI-Window slot1, value 2 at SI-Window slot 2 and so on.

**Action 704.** The radio network node 12 may then transmit (broadcast) SI information in the cell. Action 703 may be a part of the Action 704.

**Action 705.** The UE 10 may acquire a first SI message of a first set of SI messages based upon an ascending order of the first list of scheduling information whereas the UE 10 may obtain a second SI message of a second set of SI messages based on the signaled input parameter and applicable per SI. Thus, the UE 10 may use a first SI window to acquire a first SI message based on the first list of scheduling information and may use a second SI window to acquire a second SI message based on the received input parameter or indication indicating an offset in time and/or slots/frames. The start position of the second window is based on the indication, i.e., input parameter.

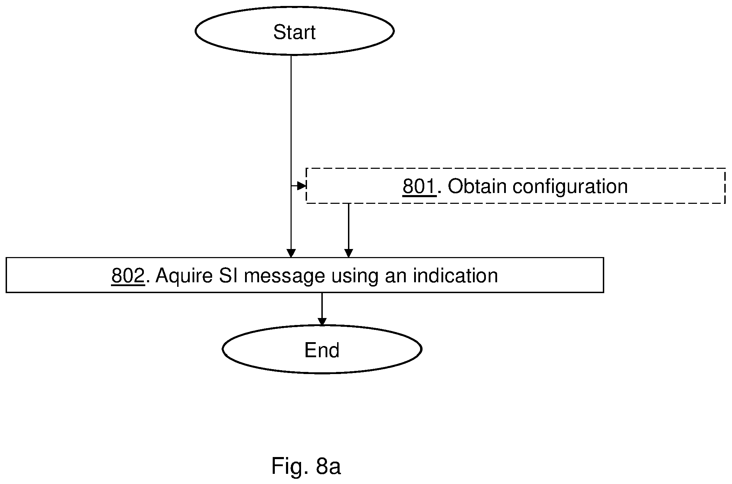

The method actions performed by the UE 10 for handling communication in the wireless communication network 1 according to some example embodiments herein will now be described with reference to a flowchart depicted in **Fig. 8a.** The actions do not have to be taken in the order stated below, but may be taken in any suitable order. Actions performed in some embodiments are marked with dashed boxes.

**Action 801.** The UE 10 may receive the indication from the radio network node 12 indicating the determined updated start positions for the one or more SI messages. The UE 10 may obtain configuration indicating that SI messages are scheduled in one or more lists of scheduling information e.g. the first and/or the second list of scheduling information and may indicate the offset in time and/or slots/frames. Hence, the indication may comprise the offset and may be related to SI messages of the one or more lists. The respective list may be a SI scheduling information list or a position SI scheduling information list. The offset may be denoted as a SI-WindowOffset and indicated in the IE or the field in the message. This field, if present may indicate the configured offset in number of slots to determine the start slot of the SI message in the second list of scheduling information. The UE 10 may thus receive configuration data from the radio network node comprising the indication. The indication indicating the offset may also be termed as si-WindowStart-r16; wherein si-WindowStart-r16 Identifies the start of the SI-windows carrying this SI-message.

**Action 802.** The UE 10 may acquire a SI message, being configured by the second list of scheduling information, taking the received indication into account, wherein the indication is an indication of an offset of a start position of the SI window for acquiring the SI message. The UE 10 may use the indication to determine a start position for a SI window used for acquiring SI messages. The UE 10 may acquire a first SI message of a first set of SI messages based upon an ascending order of the first list of scheduling information whereas the UE 10 may obtain a second SI message of a second set of SI messages based on the signaled indication and applicable per SI. Thus, the UE 10 may use a first SI window to acquire a first SI message based on the first list of scheduling information and may use a second SI window to acquire a second SI message based on an offset in time and/or slots/frames. The start position of the second window may thus be based on the indication.

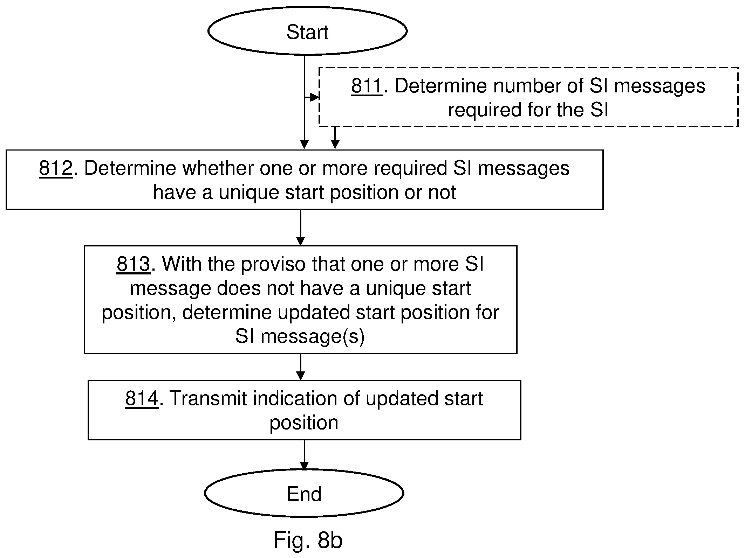

The method actions performed by the radio network node 12 for handling communication in the wireless communication network 1 according to some example embodiments herein will now be described with reference to a flowchart depicted in **Fig. 8b.** The actions do not have to be taken in the order stated below but may be taken in any suitable order. Actions performed in some embodiments are marked with dashed boxes.

**Action 811.** The radio network node 12 may determine or evaluate number of SI messages that is to be scheduled in the cell and may determine start positions for respective SI message.

**Action 812.** The radio network node 12 determines whether or not the number of SI messages that is to be scheduled have a respective start position where in said respective start position there is a conflict with another SI message or/and resources are not evenly occupied in time frequency domain. Thus, the radio network node 12 determines whether the one or more SI messages have a unique start position or not.

**Action 813.** The radio network node 12 selects or determines an updated start position for the one or more SI messages that have a conflict with another SI message and/or which resources are not evenly occupied in time frequency domain. Thus, with the proviso that one or more SI messages have a conflicting position with another SI message, i.e., that the one or more SI messages do not have a unique start position, the radio network node 12 determines additional updated start positions for the one or more SI messages.

**Action 814.** The radio network node 12 further transmits an indication to the UE 10, i.e., broadcasts, indicating the determined updated start positions for the one or more SI messages. The radio network node 12 may for example, configure the UE 10 that SI messages are scheduled according to the first and the second list of scheduling information and may indicate with the indication an offset in time and/or slots/frames. Hence, the indication may comprise an offset and may be related to SI messages of the first and/or the second list. The indication indicating the offset may be denoted as a si-WindowOffset and indicated in the IE or the field in the message. This field, if present, may indicate the configured offset in number of slots to determine the start slot of the SI message in the list. The indication indicating the offset may also be termed as si-WindowStart-r16; wherein si-WindowStart-r16 Identifies the start of the SI-windows carrying this SI-message.

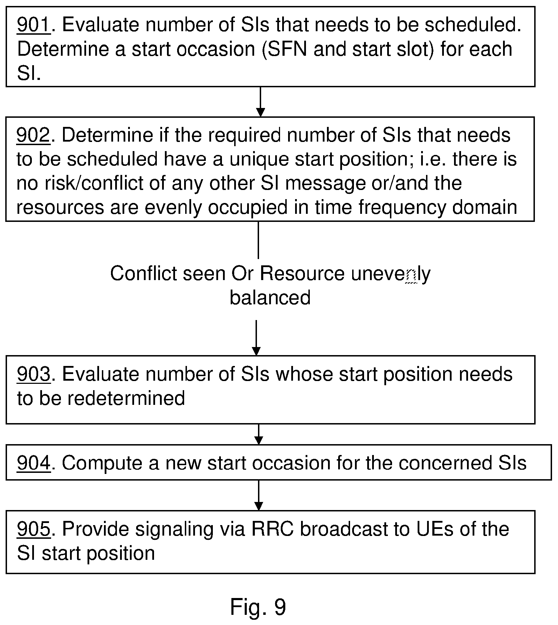

**Fig. 9** is a schematic overview depicting a method, according to some embodiments herein, performed by the radio network node 12.

**Action 901.** The radio network node 12 may evaluate number of SI messages that needs to be scheduled in the cell and may determine a start occasion, e.g., a SFN and start slot, for each SI.

**Action 902.** The radio network node 12 may determine if the required number of SI messages that needs to be scheduled have a unique start position; i.e., there is no risk/conflict of any other SI message or/and the resources are evenly occupied in time frequency domain.

**Action 903.** With the proviso that the one or more SI messages have a conflicting start position, the radio network node 12 may evaluate number of SIs whose start position needs to be determined.

**Action 904.** The radio network node 12 may further compute (or select) a new start occasion for the concerned SIs. Thus, the radio network node 12 selects additional start positions for the one or more SI messages with start positions conflicting with other SI messages.

**Action 905.** The radio network node 12 may then provide signalling via RRC broadcast to UEs of the SI start position. For example, transmit indication of the offset for the second set of SI messages. The indication indicating the offset may be denoted as the input parameter or a si-WindowOffset and indicated in an IE or a field in a message. This field, if present, may indicate the configured offset in number of slots to determine the start slot of the SI message in the list.

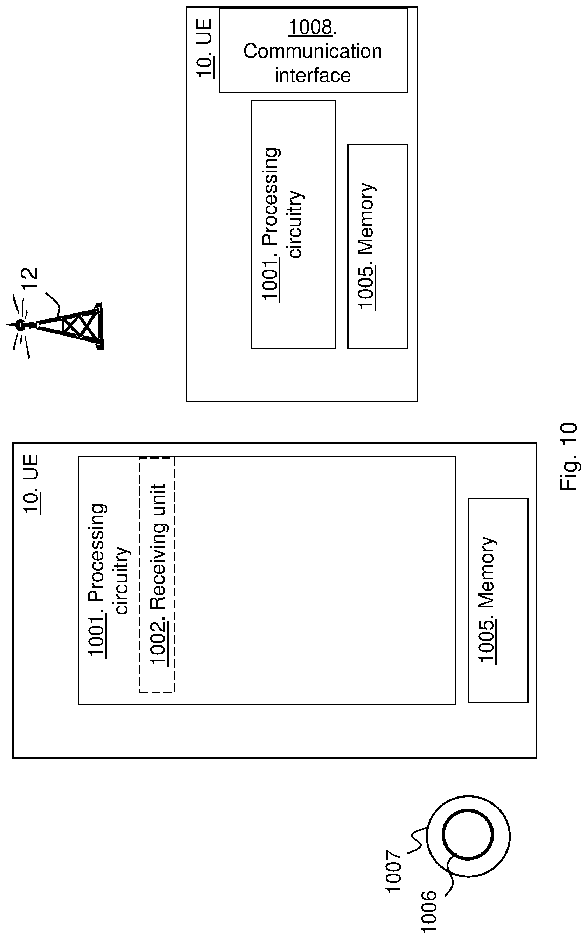

**Fig. 10** is a block diagram depicting the UE 10 for determining the start position of the SI window to acquire the SI message in the wireless communication network 1 according to embodiments herein. One or more SI messages are scheduled using the first or the second list of scheduling information. The UE 10 may be for handling communication, e.g., handling SI, in the wireless communication network 1.

The UE 10 may comprise **processing circuitry 1001,** e.g., one or more processors, configured to perform the methods herein.

The UE 10 may comprise a **receiving unit 1002,** e.g., a receiver or a transceiver. The UE 10, the processing circuitry 1001 and/or the receiving unit 1002 is configured to, if the SI message is scheduled using the first list of scheduling information, determine the start position of the SI window based on the location of the SI message in the first list of scheduling information. The UE 10, the processing circuitry 1001 and/or the receiving unit 1002 is configured to, if the SI message is scheduled using the second list of scheduling information, determine the start position of the SI window by taking the received input parameter into account, wherein the received input parameter is indicating the start position of the SI window used for acquiring the SI message. The UE 10, the processing circuitry 1001 and/or the receiving unit 1002 may be configured to receive, from the network, configuration indicating if the SI message is scheduled using the first or the second list of scheduling information, and/or the input parameter indicating the start position of the SI window used for acquiring the SI message, thereby allowing the SI window to be offset. The received input parameter may be a value configured at the radio network node 12. The UE 10, the processing circuitry 1001 and/or the receiving unit 1002 may be configured to determine the start position, in case the SI message is scheduled using the second list of scheduling information, based on the integer value, which integer value is based on said received input parameter and the window length of the SI message. The UE 10, the processing circuitry 1001 and/or the receiving unit 1002 may be configured to calculate the integer value by taking the received input parameter minus 1 and multiplying it with a value representing the window length of the SI window. The received input parameter may be indicated in the IE, in which presence in said IE indicates the start position of the SI window. The received input parameter may be indicated in the field in the message in which presence of said field indicates the start position of the SI window.

The UE 10, the processing circuitry 1001 and/or the receiving unit 1002 may be configured to receive the indication from the radio network node 12 indicating the determined updated start positions for the one or more SI messages. The UE 10, the processing circuitry 1001 and/or the receiving unit 1002 may be configured to obtain configuration indicating that SI messages are scheduled in one or more lists of scheduling information, e.g., the first and/or the second list of scheduling information and may indicate the offset in time and/or slots/frames. Hence, the indication may comprise the offset and may be related to SI messages of the one or more lists. The list may be a SI scheduling information list or a position SI scheduling information list. The offset may be denoted as a si-WindowOffset and indicated in the IE or the field in the message. This field, if present, may indicate the configured offset in number of slots to determine the start slot of the SI message in the second list of scheduling information. The UE 10, the processing circuitry 1001 and/or the receiving unit 1002 may be configured to receive configuration data from the radio network node comprising the indication.

The UE 10, the processing circuitry 1001 and/or the receiving unit 1002 is configured to acquire a SI message, being configured by a list of scheduling information, taking the received indication into account, wherein the indication is an indication of an offset of a start position for the SI message. The UE 10, the processing circuitry 1001 and/or the receiving unit 1002 may be configured to use the indication to determine a start position for a SI window used for acquiring SI messages. The UE 10, the processing circuitry 1001 and/or the receiving unit 1002 may be configured to acquire a first SI message of a first set of SI messages based upon an ascending order of a first list of scheduling information whereas the UE 10 may obtain a second SI message of a second set of SI messages based on the signaled indication and applicable per SI. Thus, the UE 10, the processing circuitry 1001 and/or the receiving unit 1002 may be configured to use the first SI window to acquire the first SI message based on the first list of scheduling information and to use the second SI window to acquire the second SI message based on an offset in time and/or slots/frames. The start position of the second window may thus be based on the indication.

The UE 10 further comprises **a memory 1005.** The memory comprises one or more units to be used to store data on, such as indications, SI messages, SI configuration, strengths or qualities, grants, indications, reconfiguration, configuration, values, scheduling information, timers, applications to perform the methods disclosed herein when being executed, and similar. The UE 10 comprises **a communication interface 1008** comprising transmitter, receiver, transceiver and/or one or more antennas. Thus, it is herein provided the UE for handling communication in a wireless communications network, wherein the UE comprises processing circuitry and a memory, said memory comprising instructions executable by said processing circuitry whereby said UE is operative to perform any of the methods herein.

The methods according to the embodiments described herein for the UE 10 are respectively implemented by means of e.g. **a computer program product 1006** or a computer program product, comprising instructions, i.e., software code portions, which, when executed on at least one processor, cause the at least one processor to carry out the actions described herein, as performed by the UE 10. The computer program product 1006 may be stored on **a computer-readable storage medium 1007,** e.g. a universal serial bus (USB) stick, a disc or similar. The computer-readable storage medium 1007, having stored thereon the computer program product, may comprise the instructions which, when executed on at least one processor, cause the at least one processor to carry out the actions described herein, as performed by the UE 10. In some embodiments, the computer-readable storage medium may be a non-transitory or transitory computer-readable storage medium.

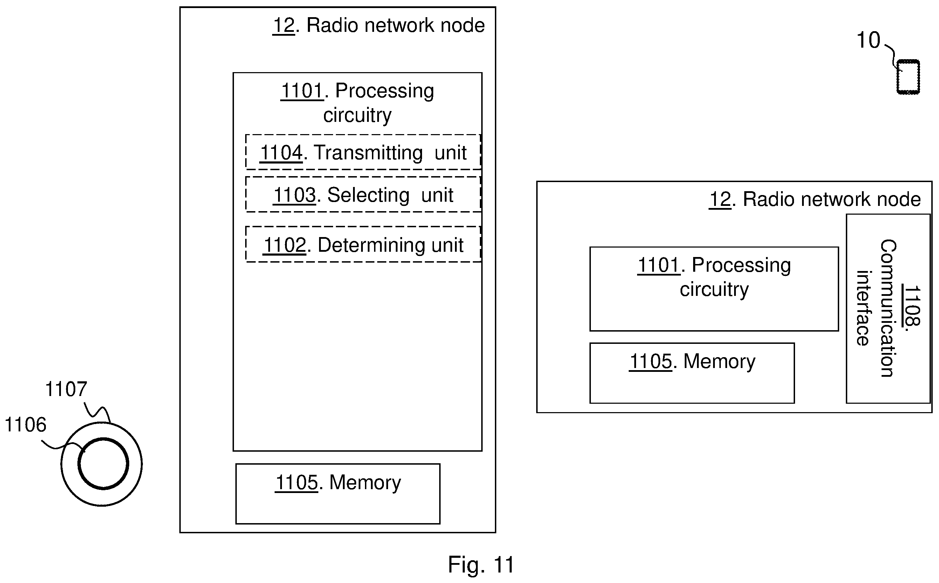

**Fig. 11** is a block diagram depicting the radio network node 12, in two embodiments, for handling communication, e.g., handling SI, in the wireless communication network 1 according to embodiments herein.

The radio network node 12 may comprise **processing circuitry 1101,** e.g. one or more processors, configured to perform the methods herein.

The radio network node 12 may comprise **a determining unit 1102.** The radio network node 12, the processing circuitry 1101 and/or the determining unit 1102 may be configured to determine or evaluate number of SI messages that is to be scheduled in the cell and may determine start positions for respective SI message. The radio network node 12, the processing circuitry 1101 and/or the determining unit 1102 is configured to determine whether or not the number of SI messages that is to be scheduled have a respective start position where in said respective start position there is a conflict with another SI message or/and resources are not evenly occupied in time frequency domain. Thus, the radio network node 12, the processing circuitry 1101 and/or the determining unit 1102 is configured to determine whether the one or more SI messages have a unique start position or not. For example, the radio network node 12, the processing circuitry 1101 and/or the selecting unit 1103 may be configured to determine whether or not a number of SI messages that are to be scheduled have a respective start position where there is a conflict with another SI message or/and resources are not evenly occupied in time frequency domain.

The radio network node 12 may comprise a **selecting unit 1103.** The radio network node 12, the processing circuitry 1101 and/or the selecting unit 1103 may be configured to select or determine an updated start position for the one or more SI messages that have a conflict with another SI message and/or which resources are not evenly occupied in time frequency domain. Thus, with the proviso that one or more SI messages have a conflicting position with another SI message i.e. that the one or more SI messages do not have a unique start position, the radio network node 12, the processing circuitry 1101 and/or the selecting unit 1103 is configured to determine the updated, or additional, start position for the one or more SI messages. For example, the radio network node 12, the processing circuitry 1101 and/or the selecting unit 1103 may be configured to determine the start position for the respective SI message out of the number of SI messages that are to be scheduled in a cell of the radio network node 12.

The radio network node 12 may comprise a **transmitting unit 1104,** e.g., a transmitter or a transceiver. The radio network node 12, the processing circuitry 1101 and/or the transmitting unit 1104 is configured to transmit the input parameter to the UE 10, i.e., broadcast the indication or input parameter, wherein the input parameter indicates the start position of the SI window used for acquiring the one or more SI messages, and thus may indicate the determined updated start positions for the one or more SI messages. The radio network node 12, the processing circuitry 1101 and/or the transmitting unit 1104 may be configured using the first and the second list of scheduling information, and to configure the UE with the input parameter, and that one or more SI messages are scheduled The radio network node 12, the processing circuitry 1101 and/or the transmitting unit 1104 may be configured to configure the UE that SI messages are scheduled in the first and the second list of scheduling information and may indicate with the input parameter an offset in time and/or slots/frames of the SI-window. Hence, the indication, i.e., the input parameter, may comprise an offset and may be related to SI messages of the first and/or the second list. The transmitted input parameter may be indicated in an IE, in which presence in said IE indicates the start position of the SI window. The transmitted input parameter may be indicated in the field in the message in which presence of said field indicates the start position of the SI window. The offset may be denoted as a si-WindowOffset and indicated in an IE or a field in a message. This field, if present, may indicate the configured offset in number of slots to determine the start slot of the SI message in the list.

The radio network node 12 further comprises a **memory 1105.** The memory comprises one or more units to be used to store data on, such as indications, input parameters, strengths or qualities, grants, messages, execution conditions, user data, reconfiguration, configurations, scheduling information, timers, applications to perform the methods disclosed herein when being executed, and similar. The radio network node 12 comprises a **communication interface 1108** comprising transmitter, receiver, transceiver and/or one or more antennas. Thus, it is herein provided the radio network node for handling communication in a wireless communications network, wherein the radio network node comprises processing circuitry and a memory, said memory comprising instructions executable by said processing circuitry whereby said radio network node is operative to perform any of the methods herein.

The methods according to the embodiments described herein for the radio network node 12 are respectively implemented by means of, e.g., a **computer program product 1106** or a computer program product, comprising instructions, i.e., software code portions, which, when executed on at least one processor, cause the at least one processor

**EP 4 295 592 B1**

to carry out the actions described herein, as performed by the radio network node 12. The computer program product 1006 may be stored on a **computer-readable storage medium 1007,** e.g., a universal serial bus (USB) stick, a disc or similar. The computer-readable storage medium 107, having stored thereon the computer program product, may comprise the instructions which, when executed on at least one processor, cause the at least one processor to carry out the actions described herein, as performed by the radio network node 12. In some embodiments, the computer-readable storage medium may be a non-transitory or transitory computer-readable storage medium.

In some embodiments a more general term "radio network node" is used and it can correspond to any type of radio network node or any network node, which communicates with a wireless device and/or with another network node. Examples of network nodes are NodeB, Master eNB, Secondary eNB, a network node belonging to Master cell group (MCG) or Secondary Cell Group (SCG), base station (BS), multistandard radio (MSR) radio node such as MSR BS, eNodeB, network controller, radio network controller (RNC), base station controller (BSC), relay, donor node controlling relay, base transceiver station (BTS), access point (AP), transmission points, transmission nodes, Remote Radio Unit (RRU), Remote Radio Head (RRH), nodes in distributed antenna system (DAS), core network node e.g. Mobility Switching Centre (MSC), Mobile Management Entity (MME) etc., Operation and Maintenance (O&M), Operation Support System (OSS), Self-Organizing Network (SON), positioning node e.g. Evolved Serving Mobile Location Centre (E-SMLC), Minimizing Drive Test (MDT) etc.

In some embodiments the non-limiting term wireless device or UE is used and it refers to any type of wireless device communicating with a network node and/or with another UE in a cellular or mobile communication system. Examples of UE are target device, device-to-device (D2D) UE, proximity capable UE (aka ProSe UE), machine type UE or UE capable of machine to machine (M2M) communication, PDA, PAD, Tablet, mobile terminals, smart phone, laptop embedded equipped (LEE), laptop mounted equipment (LME), USB dongles etc.

The embodiments are described for 5G. However, the embodiments are applicable to any RAT or multi-RAT systems, where the UE receives and/or transmit signals (e.g. data) e.g. LTE, LTE FDD/TDD, WCDMA/HSPA, GSM/GERAN, Wi Fi, WLAN, CDMA2000 etc.

As will be readily understood by those familiar with communications design, that functions means or modules may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless device or network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of communications devices will appreciate the cost, performance, and maintenance trade-offs inherent in these design choices.

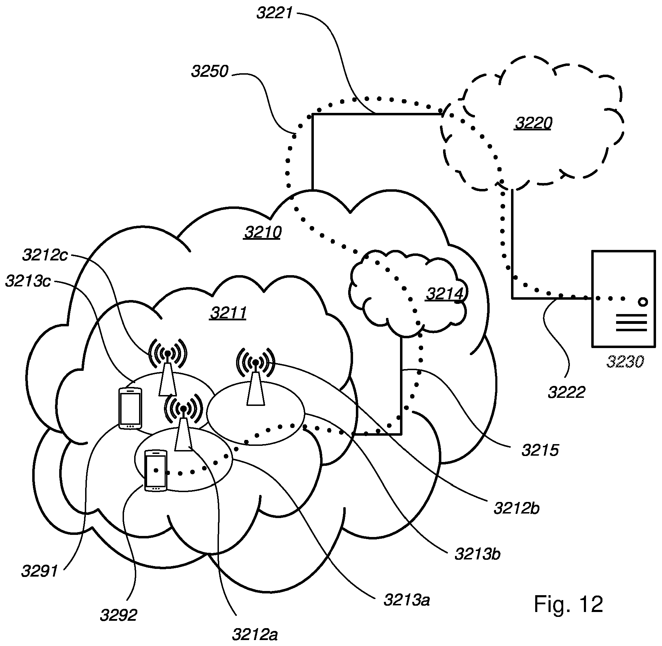

With reference to **Fig 12,** in accordance with an embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as NBs, eNBs, gNBs or other types of wireless access points being examples of the radio network node 12 herein, each defining a corresponding coverage area 3213a, 3213b, 3213c. Each base station 3212a, 3212b, 3212c is connectable to the core network 3214 over a wired or wireless connection 3215. A first user equipment (UE) 3291, being an example of the UE 10, located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

22

The communication system of Figure 12 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

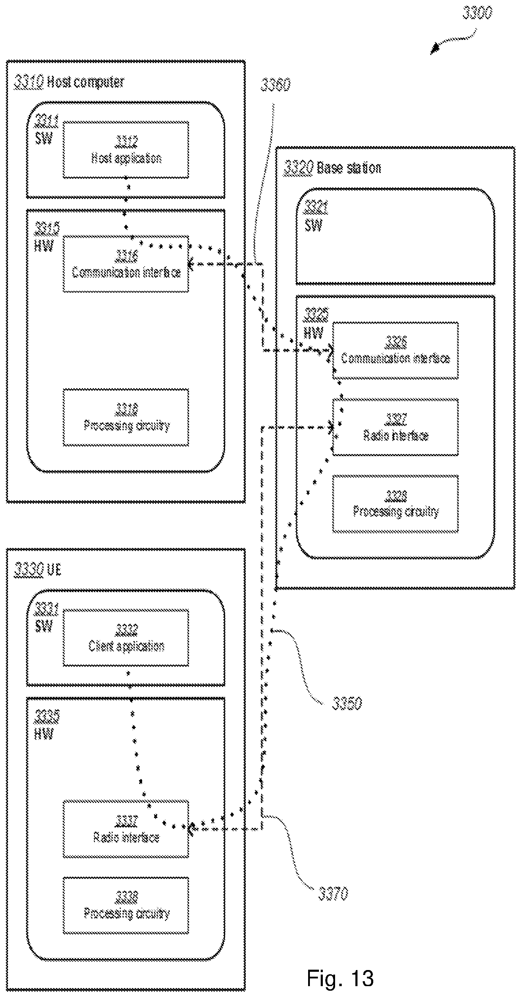

Example implementations, in accordance with an embodiment, of the UE, base station and host computer discussed in the preceding paragraphs will now be described with reference to **Fig. 13.** In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Fig.13) served by the base station 3320. The communication interface 3326 may be configured to facilitate a connection 3360 to the host computer 3310. The connection 3360 may be direct or it may pass through a core network (not shown in Fig.13) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Fig. 13 may be identical to the host computer 3230, one of the base stations 3212a, 3212b, 3212c and one of the UEs 3291, 3292 of Fig. 12, respectively. This is to say, the inner workings of these entities may be as shown in Fig. 13 and independently, the surrounding network topology may be that of Fig. 12.

In Fig. 13, the OTT connection 3350 has been drawn abstractly to illustrate the communication between the host computer 3310 and the user equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may achieve a SI transmission procedure avoiding collision of SI messages , or position SI message, and thereby provide benefits such as improved battery time, and better responsiveness at the UE side.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

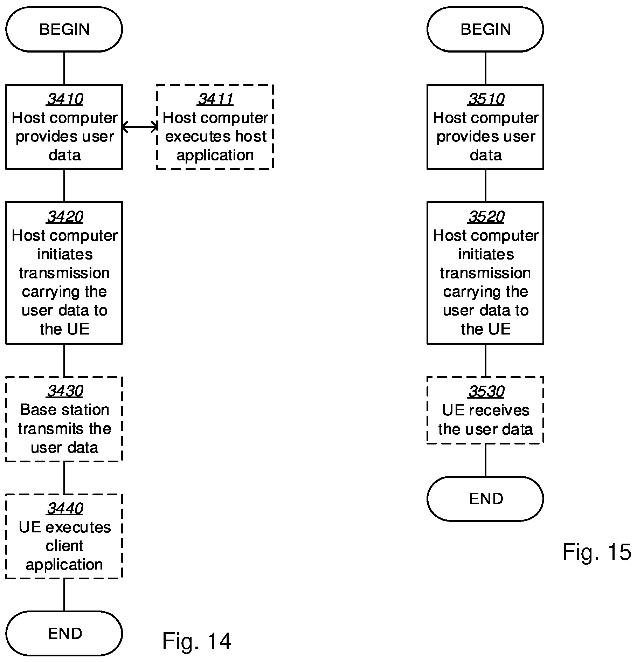

**Fig. 14** is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 14 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

**Fig. 15** is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 15 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

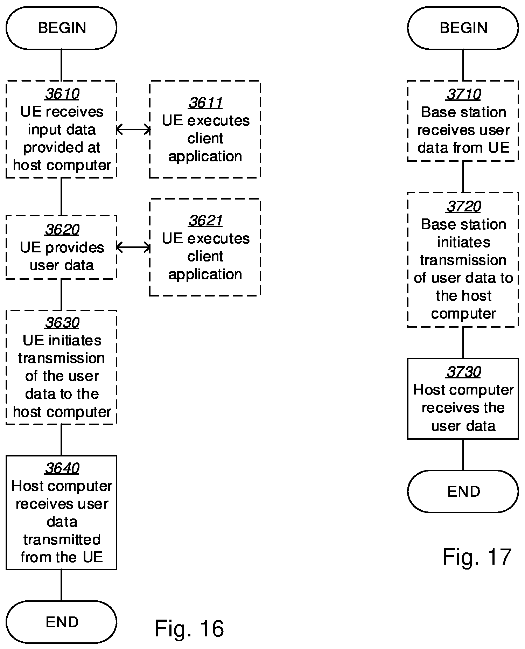

**Fig. 16** is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 16 will be included in this section. In an optional first step 3610 of the method, the UE receives input data provided by the host computer. Additionally or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

**Fig. 17** is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 17 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims.

| Abbreviation | Explanation |
| --- | --- |
| 3GPP | 3rd Generation Partnership Project |
| 5G | 5th Generation |
| 5GS | 5G System |
| 5GC | 5G Core network |
| CHO | Conditional Handover |
| CR | Change Request |
| DAPS | Dual Active Protocol Stack |
| DRB | Data Radio Bearer |
| E-UTRAN | Evolved Universal Terrestrial Access Network |
| gNB | 5G Node B |
| HO | Handover |
| LTE | Long-term Evolution |
| NG | The interface/reference point between the RAN and the CN in 5G/NR. |
| NG-C | The control plane part of NG (between a gNB and an AMF). |
| NG-U | The user plane part of NG (between a gNB and a UPF) |
| NG-RAN | Next Generation Radio Acceses Network |
| NR | New Radio |
| PDCP | Packet Data Convergence Protocol |
| PDU | Protocol Data Unit |
| RAN | Radio Access Network |
| RB | Radio Bearer |
| RLC | Radio Link Control |
| ROHC | Robust Header Compression |
| RRC | Radio Resource Control |
| SDU | Service Data Unit |
| SGW | Serving Gateway |
| SN | Sequence Number |
| TS | Technical Specification |
| UE | User Equipment |
| UL | Uplink |
| UPF | User Plane Function |
| Xn | The interface/reference point between two gNBs |

ANNEX: Draft of change request.

| Reason for change: | The current offsetToSI-Used in NR was imported from LTE. This provides an offset of hardcoded 80ms + any offsets based upon number of SIs configured with 80ms periodicty SI. The main purpose with the offset is to avoid any collision that may happen when SI with 80ms periodicty (NR legacy SI) may reoccur at a start slot of posSI. |
|---|---|
| | The procedure of the offset is written based upon typical LTE configuration where the shortest periodicty is 80ms; because SIB1 is transmitted at every 80ms. Besides, in many operators the SI-Window configured in LTE was 10ms. Hence, it was assumed that first 8 rf can be kept for LTE SI and after 80ms + the reoccurence of 80ms SIs; then posSI can start. |
| | However, this assumption is not valid for NR; as the shortest periodcity that is typically configured is 160ms rather than 80ms. Besides, the SI-Window length is larger than what was in LTE; typically it is 20ms. When Dynamic shared spectrum feature is used, a typical SI-Window length would be between 40 -160ms, depending on the amount of MBSFN subframes available for System Information. With this sort of configuration and deployment, the current offsetToSI-Used based upon 80ms hardcoded offset will fail.<br><br>3> determine the number $m$ which corresponds to the number of SI messages with an associated *si-Periodicity* of 8 radio frames (80 ms), configured by *schedulingInfoList* in *SIB1*;<br><br>3> for the concerned SI message, determine the number $n$ which corresponds to the order of entry in the list of SI messages configured by *posSchedulingInfoList* in *SIB1*;<br><br>3> determine the integer value $x = m \times w + (n - 1) \times w$, where $w$ is the *si-WindowLength* |
| | Above offset will not work for typical NR configuration with 160ms shortest periodicty and 20ms SI-Window. |
| | Hence, instead of hardcoded 8 radio frames; the configurable value is provided. |
| | Impacted 5G architecture options: |
| | NR SA, NR-DC, (NG)EN-DC, NE-DC |
| | Impacted functionality: |
| | posSI Acquisition. |
| | Inter-operability: |
| | If the NW implements this CR but the UE does not:<br>- UE may not receive the posSI<br>If the UE implements this CR but the NW does not:<br>- The posSI may not be scheduled |

| Summary of change: | Add a new field to provide the configured offset and update the SI acquisition procedure to take the field into account while calculating the offset. |
|---|---|
| Consequences if not approved: | posSI may not be scheduled because the start slot would be ambigous. There will be conflict between the repeated SI (periodic occurrence) with the start of posSI. |

| Clauses affected: | 6.4.3 | | |
|---|---|---|---|
| | **Y** **N** | | |
| Other specs affected: (show related CRs) | ☐ ☐ | Other core specifications | TS/TR ... CR ... |
| | ☐ ☐ | Test specifications | TS/TR ... CR ... |
| | ☐ ☐ | O&M Specifications | TS/TR ... CR ... |
| Other comments: | | | |

| This CR's revision history: |
|---|

---

| Beginning of Changes |
|---|

### 5.2.2.3.2 Acquisition of an SI message

For SI message acquisition PDCCH monitoring occasion(s) are determined according to *searchSpaceOtherSystemInformation*. If *searchSpaceOtherSystemInformation* is set to zero, PDCCH monitoring occasions for SI message reception in SI-window are same as PDCCH monitoring occasions for *SIB1* where the mapping between PDCCH monitoring occasions and SSBs is specified in TS 38.213[13]. If *searchSpaceOtherSystemInformation* is not set to zero, PDCCH monitoring occasions for SI message are determined based on search space indicated by *searchSpaceOtherSystemInformation*. PDCCH monitoring occasions for SI message which are not overlapping with UL symbols (determined according to *tdd-UL-DL-ConfigurationCommon*) are sequentially numbered from one in the SI window. The $[x \times N+K]^{th}$ PDCCH monitoring occasion (s) for SI message in SI-window corresponds to the $K^{th}$ transmitted SSB, where $x = 0, 1, ...X-1, K = 1, 2, ...N$, N is the number of actual transmitted SSBs determined according to *ssb-PositionsInBurst* in *SIB1* and X is equal to CEIL(number of PDCCH monitoring occasions in SI-window/N). The actual transmitted SSBs are sequentially numbered from one in ascending order of their SSB indexes. The UE assumes that, in the SI window, PDCCH for an SI message is transmitted in at least one PDCCH monitoring occasion corresponding to each transmitted SSB and thus the selection of SSB for the reception SI messages is up to UE implementation. When acquiring an SI message, the UE shall:

1> determine the start of the SI-window for the concerned SI message as follows:

2> if the concerned SI message is configured in the *schedulingInfoList:*

3> for the concerned SI message, determine the number n which corresponds to the order of entry in the list of SI messages configured by *schedulingInfoList* in *si-SchedulingInfo* in *SIB1*;

3> determine the integer value $x = (n - 1) \times w$, where w is the *si-WindowLength;*

3> the SI-window starts at the slot #*a,* where $a = x \bmod N$, in the radio frame for which SFN mod $T =$ FLOOR(x/N), where $T$ is the *si-Periodicity* of the concerned SI message and N is the number of slots in a radio frame as specified in TS 38.213 [13];

2> else if the concerned SI message is configured in the *posSchedulingInfoList* and neither *offsetToSI-Used* nor *si-WindowOffset* is configured:

3> create a concatenated list of SI messages by appending the *posSchedulingInfoList* in *posSI-Schedu-*

*lingInfo* in *SIB1* to *schedulingInfoList* in *si-SchedulingInfo* in *SIB1;*

3> for the concerned SI message, determine the number n which corresponds to the order of entry in the concatenated list;

3> determine the integer value $x = (n - 1) \times$ w, where w is the *si-WindowLength;*

3> the SI-window starts at the slot #*a,* where $a = x$ mod N, in the radio frame for which SFN mod $T =$ FLOOR(x/N), where $T$ is the *posSI-Periodicity* of the concerned SI message and N is the number of slots in a radio frame as specified in TS 38.213 [13];

2> else if the concerned SI message is configured by the *posSchedulingInfoList* and *offsetToSI-Used* is configured:

3> determine the number m which corresponds to the number of SI messages with an associated *si-Periodicity* of 8 radio frames (80 ms), configured by *schedulingInfoList* in *SIB1;*

3> for the concerned SI message, determine the number n which corresponds to the order of entry in the list of SI messages configured by *posSchedulingInfoList* in *SIB1;*

3> determine the integer value $x = m \times$ w $+ (n - 1) \times$ w, where w is the *si-WindowLength*

3> the SI-window starts at the slot #*a,* where $a = x$ mod N, in the radio frame for which SFN mod $T =$ FLOOR(x/N) +8, where $T$ is the *posSI-Periodicity* of the concerned SI message and N is the number of slots in a radio frame as specified in TS 38.213 [13];

2>else if the concerned SI message is configured by the *posSchedulingInfoList* and *si-WindowOffset* is configured in any SI message:

3>determine the integer value $x = (si\text{-}WindowOffset - 1) \times$ w, where w is the *si-WindowLength;*
3>the SI-window starts at the slot #a, where $a = x$ mod N, in the radio frame for which SFN mod $T =$ FLOOR(x/N), where $T$ is the *posSI-Periodicity* of the concerned SI message and N is the number of slots in a radio frame as specified in TS 38.213 [13];

1> receive the PDCCH containing the scheduling RNTI, i.e. SI-RNTI in the PDCCH monitoring occasion(s) for SI message acquisition, from the start of the SI-window and continue until the end of the SI-window whose absolute length in time is given by *si-WindowLength,* or until the SI message was received;

1> if the SI message was not received by the end of the SI-window, repeat reception at the next SI-window occasion for the concerned SI message in the current modification period;

NOTE 1: The UE is only required to acquire broadcasted SI message if the UE can acquire it without disrupting unicast data reception, i.e. the broadcast and unicast beams are quasi co-located.

NOTE 2: The UE is not required to monitor PDCCH monitoring occasion(s) corresponding to each transmitted SSB in SI-window.

NOTE 3: If the concerned SI message was not received in the current modification period, handling of SI message acquisition is left to UE implementation.

NOTE 4: A UE in RRC_CONNECTED may stop the PDCCH monitoring during the SI window for the concerned SI message when the requested SIB(s) are acquired.

NOTE 5: A UE capable of NR sidelink communication and configured by upper layers to perform NR sidelink communication on a frequency, may acquire *SIB12* from a cell other than current serving cell (for RRC_INACTIVE or RRC_IDLE) or current PCell (for RRC_CONNECTED), if *SIB12* of current serving cell (for RRC_INACTIVE or RRC_IDLE) or current PCell (for RRC_CONNECTED) does not provide configuration for NR sidelink communication for the frequency, and if the other cell providing configuration for NR sidelink communication for the frequency meets the S-criteria as defined in TS 38.304 [20] and TS 36.304 [27].

1> perform the actions for the acquired SI message as specified in sub-clause 5.2.2.4.

5.2.2.3.3 Request for on demand system information

| Next Change |
| --- |

*PosSI-SchedulingInfo*

```
-- ASN1START
-- TAG-POSSI-SCHEDULINGINFO-START

PosSI-SchedulingInfo-r16 ::=              SEQUENCE {
    posSchedulingInfoList-r16                SEQUENCE (SIZE (1..maxSI-Message)) OF
PosSchedulingInfo-r16,
    posSI-RequestConfig-r16                     SI-RequestConfig
OPTIONAL,   -- Cond MSG-1
    posSI-RequestConfigSUL-r16                  SI-RequestConfig
OPTIONAL,   -- Cond SUL-MSG-1
    ...,
    [[
    si-WindowOffset-v16xy                       INTEGER (1..8192)
              OPTIONAL   -- Need R
    ]]
}


PosSchedulingInfo-r16 ::= SEQUENCE {
    offsetToSI-Used-r16          ENUMERATED {true}
OPTIONAL,   -- Need P
    posSI-Periodicity-r16        ENUMERATED {rf8, rf16, rf32, rf64, rf128, rf256, rf512},
    posSI-BroadcastStatus-r16    ENUMERATED {broadcasting, notBroadcasting},
    posSIB-MappingInfo-r16       PosSIB-MappingInfo-r16,
    ...
}


PosSIB-MappingInfo-r16 ::=   SEQUENCE (SIZE (1..maxSIB)) OF PosSIB-Type-r16

PosSIB-Type-r16 ::=          SEQUENCE {
    encrypted-r16                ENUMERATED { true }
OPTIONAL,   -- Need R
    gnss-id-r16                  GNSS-ID-r16
OPTIONAL,   -- Need R
    sbas-id-r16                  SBAS-ID-r16
OPTIONAL,   -- Need P
```

```
        posSibType-r16                   ENUMERATED { posSibType1-1, posSibType1-2, posSibType1-3,
posSibType1-4, posSibType1-5, posSibType1-6,

                                          posSibType1-7, posSibType1-8, posSibType2-1,
posSibType2-2, posSibType2-3, posSibType2-4,

                                          posSibType2-5, posSibType2-6, posSibType2-7,
posSibType2-8, posSibType2-9, posSibType2-10,

                                          posSibType2-11, posSibType2-12, posSibType2-
13, posSibType2-14, posSibType2-15,

                                          posSibType2-16, posSibType2-17, posSibType2-
18, posSibType2-19, posSibType2-20,

                                          posSibType2-21, posSibType2-22, posSibType2-
23, posSibType3-1, posSibType4-1,

                                          posSibType5-1,posSibType6-1, posSibType6-2,
posSibType6-3,... },
        areaScope-r16                    ENUMERATED {true}
OPTIONAL -- Need S
}


GNSS-ID-r16 ::= SEQUENCE {
        gnss-id-r16                      ENUMERATED{gps, sbas, qzss, galileo, glonass, bds, ...},
        ...
}


SBAS-ID-r16 ::= SEQUENCE {
        sbas-id-r16                      ENUMERATED { waas, egnos, msas, gagan, ...},
        ...
}


-- TAG-POSSI-SCHEDULINGINFO-STOP
-- ASN1STOP
```

| PosSI-SchedulingInfo field descriptions |
| --- |
| **areaScope** <br> Indicates that a posSIB is area specific. If the field is absent, the posSIB is cell specific. |
| **encrypted** <br> The presence of this field indicates that the *pos-sib-type* is encrypted as specified in TS 37.355 [49]. |
| **gnss-id** <br> The presence of this field indicates that the positioning SIB type is for a specific GNSS. Indicates a specific GNSS (see also TS 37.355 [49]) |
| **posSI-BroadcastStatus** <br> Indicates if the SI message is being broadcasted or not. Change of *posSI-BroadcastStat*us should not result in system information change notifications in Short Message transmitted with P-RNTI over DCI (see clause 6.5). The value of the indication is valid until the end of the BCCH modification period when set to *broadcasting*. |
| **posSI-RequestConfig** <br> Configuration of Msg1 resources that the UE uses for requesting SI-messages for which *posSI-BroadcastStatus* is set to notBroadcasting. |
| **posSI-RequestConfigSUL** <br> Configuration of Msg1 resources that the UE uses for requesting SI-messages for which *posSI-BroadcastStatus* is set to notBroadcasting. |
| **posSIB-MappingInfo** <br> List of the posSIBs mapped to this *SystemInformation* message. |
| **posSibType** <br> The positioning SIB type is defined in TS 37.355 [49]. |
| **posSI-Periodicity** <br> Periodicity of the SI-message in radio frames, such that rf8 denotes 8 radio frames, rf16 denotes 16 radio frames, and so on. If the *offsetToSI-Used* is configured, the *posSI-Periodicity* of rf8 cannot be used. |
| **offsetToSI-Used** <br> This field, if present indicates that the SI messages in *posSchedulingInfoList* are scheduled with an offset of 8 radio frames compared to SI messages in *schedulingInfoList*. *offsetToSI-Used* may be present only if the shortest configured SI message periodicity for SI messages in *schedulingInfoList* is 80ms or *si-WindowOffset* has not been configured. |
| **sbas-id** <br> The presence of this field indicates that the positioning SIB type is for a specific SBAS. Indicates a specific SBAS (see also TS 37.355 [49]). |
| **si-WindowOffset** <br> This field, if present indicates the configured offset in the number of slots to determine the start slot of the SI message in *posSchedulingInfoList*. |

| Conditional presence | Explanation |
| --- | --- |
| MSG-1 | The field is optionally present, Need R, if *posSI-BroadcastStatus* is set to *notBroadcasting* for any SI-message included in *PosSchedulingInfo*. It is absent otherwise. |
| SUL-MSG-1 | The field is optionally present, Need R, if *supplementaryUplink* is configured in *ServingCellConfigCommonSIB* and if *posSI-BroadcastStatus* is set to *notBroadcasting* for any SI-message included in *PosSchedulingInfo*. It is absent otherwise. |

| *End of Changes* |
| --- |

## Claims

1. A method performed by a user equipment, UE, (10) for determining a start position of a system information, SI, window used for acquiring a SI message in a wireless communication network (1), wherein SI messages are transmitted in periodically occurring SI windows, **characterized in that** one or more SI messages are scheduled using a first or a second list of scheduling information, the method comprising:

- if an SI message is scheduled using the first list of scheduling information, determining (3021) the start position of the SI window based on the order of entry of said SI message in a list of SI messages configured by the first list of scheduling information; else

- if an SI message is scheduled using the second list of scheduling information, determining (3022) the start position of the SI window by taking an input parameter into account, wherein the input parameter is a value of a field in a message received from a radio network node, said value being configured for said SI message by the radio network node, whereby the UE determines the start position of the SI window based on an integer value x, which integer value x is calculated by taking the received input parameter minus 1 and multiplying it with a value representing the window length of the SI window, wherein the SI window starts at a slot #a, where a = x mod N, in the radio frame for which SFN mod T = FLOOR(x/N), where T is the periodicity of the concerned SI message and N is the number of slots in a radio frame.

2. The method according to claim 1, further comprising

- receiving (301), from the network, configuration indicating if the SI message is scheduled using the first or the second list of scheduling information.

3. The method according to any of the claims 1-2, wherein the received input parameter is indicated in an information element, IE, in which presence in said IE indicates a start position of the SI window.

4. The method according to any of the claims 1-3, wherein the received input parameter is indicated in a field in a message in which presence of said field indicates a start position of the SI window.

5. A computer program product comprising instructions, which, when executed on at least one processor, cause the at least one processor to carry out the method according to any of the claims 1-4, as performed by the UE (10).

6. A computer-readable storage medium, having stored thereon a computer program product comprising instructions which, when executed on at least one processor, cause the at least one processor to carry out the method according to any of the claims 1-4, as performed by the UE (10).

7. A user equipment, UE, (10) for determining a start position of a system information, SI, window used for acquiring a SI message in a wireless communication network (1), wherein SI messages are transmitted in periodically occurring SI windows, **characterized in that** one or more SI messages are scheduled using a first or a second list of scheduling information, wherein the UE (10) is configured to:

- if an SI message is scheduled using the first list of scheduling information, determine the start position of the SI window based on the order of entry of said SI message in a list of SI messages configured by the first list of scheduling information; else

- if an SI message is scheduled using the second list of scheduling information, determine the start position of the SI window by taking an input parameter into account, wherein the input parameter is a value of a field in a message received from a radio network node, said value being configured for said SI message by the radio network node, whereby the UE determines the start position of the SI window based on an integer value x, which integer value x is calculated by taking the received input parameter minus 1 and multiplying it with a value representing the window length of the SI window, wherein the SI window starts at a slot #a, where a = x mod N, in the radio frame for which SFN mod T = FLOOR(x/N), where T is the periodicity of the concerned SI message and N is the number of slots in a radio frame.

8. The UE (10) according to claim 12, wherein the UE is further configured to perform operations corresponding to any of the methods of claims 2-4.

**Patentansprüche**

1. Verfahren, das durch ein Benutzergerät, UE, (10) zum Bestimmen einer Startposition eines Systeminformationsfensters, SI-Fensters, das dazu verwendet wird, eine SI-Nachricht in einem drahtlosen Kommunikationsnetzwerk (1) abzurufen, durchgeführt wird, wobei SI-Nachrichten in periodisch auftretenden SI-Fenstern übertragen werden, **dadurch gekennzeichnet, dass** eine oder mehrere SI-Nachrichten unter Verwendung einer ersten oder einer zweiten Liste von Planungsinformationen geplant werden, wobei das Verfahren Folgendes umfasst:

- wenn eine SI-Nachricht unter Verwendung der ersten Liste von Planungsinformationen geplant wird, Bestimmen (3021) der Startposition des SI-Fensters basierend auf der Eintragsreihenfolge der SI-Nachricht in einer Liste von SI-Nachrichten, die durch die erste Liste von Planungsinformationen konfiguriert werden; ansonsten
- wenn eine SI-Nachricht unter Verwendung der zweiten Liste von Planungsinformationen geplant wird, Bestimmen (3022) der Startposition des SI-Fensters unter Berücksichtigung eines Eingabeparameters, wobei der Eingabeparameter ein Wert eines Felds in einer Nachricht, die von einem Funknetzwerkknoten empfangen wurde, ist, wobei der Wert durch den Funknetzwerkknoten für die SI-Nachricht konfiguriert wird, wodurch das UE die Startposition des SI-Fensters basierend auf einem ganzzahligen Wert x bestimmt, wobei der ganzzahlige Wert x durch Abziehen von 1 von dem empfangenen Eingabeparameter und Multiplizieren dessen mit einem Wert, der die Fensterlänge des SI-Fensters darstellt, berechnet wird, wobei das SI-Fenster an einem Schlitz #a startet, wobei a = x mod N, in dem Funkrahmen, für den SFN mod T = FLOOR(x/N) ist, wobei T die Periodizität der betreffenden SI-Nachricht ist und N die Anzahl von Schlitzen in einem Funkrahmen ist.

2. Verfahren nach Anspruch 1, ferner umfassend:

- Empfangen (301), von dem Netzwerk, einer Konfiguration, die anzeigt, ob die SI-Nachricht unter Verwendung der ersten oder der zweiten Liste von Planungsinformationen geplant wird.

3. Verfahren nach einem der Ansprüche 1-2, wobei der empfangene Eingabeparameter in einem Informationselement, IE, angezeigt wird, in dem ein Vorhandensein in dem IE eine Startposition des SI-Fensters anzeigt.

4. Verfahren nach einem der Ansprüche 1-3, wobei der empfangene Eingabeparameter in einem Feld in einer Nachricht angezeigt wird, in der ein Vorhandensein des Felds eine Startposition des SI-Fensters anzeigt.

5. Computerprogrammprodukt, das Anweisungen umfasst, die, wenn sie auf mindestens einem Prozessor ausgeführt werden, den mindestens einen Prozessor veranlassen, das Verfahren nach einem der Ansprüche 1-4, wie es durch das UE (10) durchgeführt wird, umzusetzen.

6. Computerlesbares Speichermedium, das ein darauf gespeichertes Computerprogrammprodukt aufweist, das Anweisungen umfasst, die, wenn sie auf mindestens einem Prozessor ausgeführt werden, den mindestens einen Prozessor veranlassen, das Verfahren nach einem der Ansprüche 1-4, wie es durch das UE (10) durchgeführt wird, umzusetzen.

7. Benutzergerät, UE, (10) zum Bestimmen einer Startposition eines Systeminformationsfensters, SI-Fensters, das dazu verwendet wird, eine SI-Nachricht in einem drahtlosen Kommunikationsnetzwerk (1) abzurufen, wobei SI-Nachrichten in periodisch auftretenden SI-Fenstern übertragen werden, **dadurch gekennzeichnet, dass** eine oder mehrere SI-Nachrichten unter Verwendung einer ersten oder einer zweiten Liste von Planungsinformationen geplant werden, wobei das UE (10) zu Folgendem konfiguriert ist:

- wenn eine SI-Nachricht unter Verwendung der ersten Liste von Planungsinformationen geplant wird, Bestimmen der Startposition des SI-Fensters basierend auf der Eintragsreihenfolge der SI-Nachricht in einer Liste von SI-Nachrichten, die durch die erste Liste von Planungsinformationen konfiguriert werden; ansonsten
- wenn eine SI-Nachricht unter Verwendung der zweiten Liste von Planungsinformationen geplant wird, Bestimmen der Startposition des SI-Fensters unter Berücksichtigung eines Eingabeparameters, wobei der Eingabeparameter ein Wert eines Felds in einer Nachricht, die von einem Funknetzwerkknoten empfangen wurde, ist, wobei der Wert durch den Funknetzwerkknoten für die SI-Nachricht konfiguriert wird, wodurch das UE die Startposition des SI-Fensters basierend auf einem ganzzahligen Wert x bestimmt, wobei der ganzzahlige Wert x durch Abziehen von 1 von dem empfangenen Eingabeparameter und Multiplizieren dessen mit einem Wert, der die Fensterlänge des SI-Fensters darstellt, berechnet wird, wobei das SI-Fenster an einem Schlitz #a startet, wobei a = x mod N, in dem Funkrahmen, für den SFN mod T = FLOOR(x/N) ist, wobei T die Periodizität der betreffenden SI-Nachricht ist und N die Anzahl von Schlitzen in einem Funkrahmen ist.

8. UE (10) nach Anspruch 12, wobei das UE ferner dazu konfiguriert ist, Vorgänge, die einem beliebigen der Verfahren nach den Ansprüchen 2-4 entsprechen, durchzuführen.

**Revendications**

1. Procédé mis en œuvre par un équipement utilisateur, UE, (10) pour déterminer une position de départ d'une fenêtre d'information de système, SI, utilisée pour acquérir un message de SI dans un réseau de communication sans fil (1), dans lequel les messages de SI sont transmis dans des fenêtres de SI se produisant périodiquement, **caractérisé en ce qu'**un ou plusieurs messages de SI sont programmés en utilisant une première ou une seconde liste d'informations de programmation, le procédé comprenant :

   - si un message de SI est programmé en utilisant la première liste d'informations de programmation, la détermination (3021) de la position de départ de la fenêtre de SI sur la base de l'ordre d'entrée dudit message de SI dans une liste de messages de SI configurée par la première liste d'informations de programmation ; sinon
   - si un message SI est programmé en utilisant la seconde liste d'informations de programmation, la détermination (3022) de la position de départ de la fenêtre de SI en tenant compte d'un paramètre d'entrée, dans lequel le paramètre d'entrée est une valeur d'un champ dans un message reçu à partir d'un nœud de réseau radio, ladite valeur étant configurée pour ledit message de SI par le nœud de réseau radio, moyennant quoi l'UE détermine la position de départ de la fenêtre de SI sur la base d'une valeur entière x, cette valeur entière x est calculée en prenant le paramètre d'entrée reçu moins 1 et en le multipliant par une valeur représentant la longueur de fenêtre de la fenêtre de SI, dans lequel la fenêtre de SI commence à un créneau #a, où a = x mod N, dans la trame radio pour laquelle SFN mod T = FLOOR(x/N), où T est la périodicité du message de SI concerné et N est le nombre de créneaux dans une trame radio.

2. Procédé selon la revendication 1, comprenant en outre

   - la réception (301), en provenance du réseau, d'une configuration indiquant si le message de SI est programmé en utilisant la première ou la seconde liste d'informations de programmation.

3. Procédé selon l'une quelconque des revendications 1 et 2, dans lequel le paramètre d'entrée reçu est indiqué dans un élément d'information, IE, dont la présence dans ledit IE indique une position de départ de la fenêtre de SI.

4. Procédé selon l'une quelconque des revendications 1 à 3, dans lequel le paramètre d'entrée reçu est indiqué dans un champ dans un message, dans lequel la présence dudit champ indique une position de départ de la fenêtre de SI.

5. Produit de programme informatique comprenant des instructions qui, lorsqu'elles sont exécutées sur au moins un processeur, amènent l'au moins un processeur à mettre en œuvre le procédé selon l'une quelconque des revendications 1 à 4, tel qu'il est mis en œuvre par l'UE (10).

6. Support de stockage lisible par ordinateur, sur lequel est stocké un produit de programme informatique comprenant des instructions qui, lorsqu'elles sont exécutées sur au moins un processeur, amènent l'au moins un processeur à mettre en œuvre le procédé selon l'une quelconque des revendications 1 à 4, tel qu'il est mis en œuvre par l'UE (10).

7. Équipement utilisateur, UE, (10) pour la détermination d'une position de départ d'une fenêtre d'information de système, SI, utilisée pour l'acquisition d'un message de SI dans un réseau de communication sans fil (1), dans lequel les messages de SI sont transmis dans des fenêtres de SI se produisant périodiquement, **caractérisé en ce qu'**un ou plusieurs messages de SI sont programmés en utilisant une première ou une seconde liste d'informations de programmation, dans lequel l'UE (10) est configuré pour :

   - si un message de SI est programmé en utilisant la première liste d'informations de programmation, déterminer la position de départ de la fenêtre de SI sur la base de l'ordre d'entrée dudit message de SI dans une liste de messages de SI configurée par la première liste d'informations de programmation ; sinon
   - si un message de SI est programmé en utilisant la seconde liste d'informations de programmation, déterminer la position de départ de la fenêtre de SI en tenant compte d'un paramètre d'entrée, dans lequel le paramètre d'entrée est une valeur d'un champ dans un message reçu à partir d'un nœud de réseau radio, ladite valeur étant configurée pour ledit message de SI par le nœud de réseau radio, moyennant quoi l'UE détermine la position de départ de la fenêtre de SI sur la base d'une valeur entière x, cette valeur entière x est calculée en prenant le paramètre d'entrée reçu moins 1 et en le multipliant par une valeur représentant la longueur de fenêtre de la fenêtre de SI, dans lequel la fenêtre de SI commence à un créneau #a, où a = x mod N, dans la trame radio pour laquelle SFN mod T = FLOOR(x/N), où T est la périodicité du message de SI concerné et N le nombre de créneaux dans une trame radio.

8.  UE (10) selon la revendication 12, dans lequel l'UE est configuré en outre pour mettre en œuvre des opérations correspondant à l'un quelconque des procédés des revendications 2 à 4.

Fig. 1

Fig. 2

EP 4 295 592 B1

Fig. 3a

Fig. 3b

```
                    ┌─────────────┐
                    │    Start    │
                    └──────┬──────┘
                           │        ┌ ─ ─ ─ ─ ─ ─ ─ ─ ─ ─ ─ ─ ─ ─ ─ ┐
                           ├──────►    311. Determine start position for SI
                           │        │           messages            │
                           │        └ ─ ─ ─ ─ ─ ─ ─ ─ ─ ─ ─ ─ ─ ─ ─ ┘
                           │  │
                           ▼  ▼
         ┌──────────────────────────────────────────────────┐
         │  312. Determine whether one or more SI messages have a
         │            unique start position or not           │
         └──────────────────────┬───────────────────────────┘
                                ▼
             ┌──────────────────────────────────────┐
             │  313. With the proviso that one or more SI
             │  messages do not have a unique start position,
             │  determine updated start position for SI
             │            message(s)                 │
             └──────────────────┬───────────────────┘
                                ▼
             ┌──────────────────────────────────────┐
             │  314. Transmit input parameter indicating start
             │            position                  │
             └──────────────────┬───────────────────┘
                                ▼
                        ┌─────────────┐
                        │     End     │
                        └─────────────┘
```

Fig. 3c

Fig. 4

Fig. 5

S1

S2

S3

S4

S5

S6

S7

S8

S1

S9

S10

Fig. 6

12

~10

701. Determine conflict of required SI messages

702. Determine start position

703. Indication

704. SI

705. Aquire SI message

Fig. 7

```
                          ┌─────────────┐
                          │    Start    │
                          └──────┬──────┘
                                 │
                                 │
                                 │       ┌ ─ ─ ─ ─ ─ ─ ─ ─ ─ ─ ─ ─ ─ ─ ─ ─ ┐
                                 │  ┌ ─ ▶   801. Obtain configuration
                                 │       └ ─ ─ ─ ─ ─ ─ ─│─ ─ ─ ─ ─ ─ ─ ─ ─ ┘
                                 │                       │
                                 ▼                       ▼
              ┌──────────────────────────────────────────────────┐
              │      802. Aquire SI message using an indication   │
              └────────────────────────┬─────────────────────────┘
                                       ▼
                              ┌─────────────┐
                              │     End     │
                              └─────────────┘
```

Fig. 8a

Start

811. Determine number of SI messages required for the SI

812. Determine whether one or more required SI messages have a unique start position or not

813. With the proviso that one or more SI message does not have a unique start position, determine updated start position for SI message(s)

814. Transmit indication of updated start position

End

Fig. 8b

901. Evaluate number of SIs that needs to be scheduled. Determine a start occasion (SFN and start slot) for each SI.

902. Determine if the required number of SIs that needs to be scheduled have a unique start position; i.e. there is no risk/conflict of any other SI message or/and the resources are evenly occupied in time frequency domain

Conflict seen Or Resource unevenly balanced

903. Evaluate number of SIs whose start position needs to be redetermined

904. Compute a new start occasion for the concerned SIs

905. Provide signaling via RRC broadcast to UEs of the SI start position

Fig. 9

Fig. 10

**12. Radio network node**

**1108.**
**Communication**
**interface**

**1101. Processing**
**circuitry**

**1105. Memory**

**12. Radio network node**

**1101. Processing**
**circuitry**

**1104. Transmitting unit**

**1103. Selecting unit**

**1102. Determining unit**

**1105. Memory**

10

1107

1106

Fig. 11

Fig. 12

Fig. 13

**Fig. 14**

BEGIN

*3410*
Host computer provides user data

←→

*3411*
Host computer executes host application

*3420*
Host computer initiates transmission carrying the user data to the UE

*3430*
Base station transmits the user data

*3440*
UE executes client application

END

**Fig. 15**

BEGIN

*3510*
Host computer provides user data

*3520*
Host computer initiates transmission carrying the user data to the UE

*3530*
UE receives the user data

END

BEGIN

---

*3610*
UE receives
input data
provided at
host computer

⟷

*3611*
UE executes
client
application

---

*3620*
UE provides
user data

⟷

*3621*
UE executes
client
application

---

*3630*
UE initiates
transmission
of the user
data to the
host computer

---

*3640*
Host computer
receives user
data
transmitted
from the UE

---

END

Fig. 16

---

BEGIN

---

*3710*
Base station
receives user
data from UE

---

*3720*
Base station
initiates
transmission
of user data to
the host
computer

---

*3730*
Host computer
receives the
user data

---

END

Fig. 17

## REFERENCES CITED IN THE DESCRIPTION

**Patent documents cited in the description**

- US 2020084704 A1

- WO 2019216813 A1

**Non-patent literature cited in the description**

- **HUAWEI et al.** Addition to new LTE TC-New IE_schedulingInfoList-v12j0 and schedulingInfoList-v12j0 and schedulingInfoListExt-r12. *R5-205483*, 31 October 2020

- *3GPP TS 38.300 V15.2.0*, June 2018